# EUROPEAN PATENT APPLICATION

(11) **EP 2 169 937 A1**
(43) Date of publication of application: **31.03.2010**
(21) Application number: 09169541.1
(22) Date of filing: 04.09.2009
(51) Int. Cl.: H04N 1/00, H04N 1/32, H04N 1/44, G06F 21/00

(54) **Image forming apparatus with selective disclosure of operation history items**

(30) Priority: 29.09.2008 JP 2008250732
(71) Applicant: Oki Data Corporation, Tokyo 108-8551 (JP)
(72) Inventor: Takeya, Hitoshi, Tokyo 108-8551 (JP)
(74) Representative: Pisani, Diana Jean

(57) **Abstract**

An image forming apparatus is supplied capable of sending error report information to management server address without user information when there is no permission of user. The image forming apparatus, comprising: an image generating section for generating image data; a storing section for storing history information representing history of apparatus operation on the basis of the generated image data; a trouble detecting section for detecting trouble that occurs in the apparatus; a displaying process section that at least displays a screen of respective items contained in history information corresponding to current image data selectively, when trouble is detected; a selection instruction receiving section that receives a selection instruction of respective items from the displayed screen; a generating section that generates trouble report information containing the respective items in the selection instruction; and a sending control section that sends the generated trouble report information to an external apparatus.

## Description

### FIELD OF THE INVENTION

The invention relates to an image forming apparatus that has a function of being connected with network, and stores history information representing history of apparatus operation in a storing section.

### BACKGROUND OF THE INVENTION

Until now, as this kind of image forming apparatus, for example, as disclosed in the quotation document 1, such print apparatus is proposed that has a function of obtaining log of print history of all the network printers that are connected with the apparatus and the same LAN (Local Area Network) from network, generates print log information representing print data form, respective print times and the like in which respective printers are outputted to print on the basis of the obtained log, and stores the generated print log information in a storing section. In the apparatus, for example, when print data is received on the basis of designation of printing destination from an upper apparatus such as a connected PC (Personal Computer) through network, and in the case that trouble occurs in the apparatus and printing process is impossible, other network printer (sub printer) is searched that is performing printing process at most on the basis of print data in which the print data and data form are consistent from the print log information that is stored in the storing section, and the print data is transferred to the corresponding sub printer to perform printing process.

However, in this kind of image forming apparatus, trouble information that represents sorts, times and occurred time of all sorts of trouble and the like that were detected by all sorts of sensors in the self-machine, keeping relation information that represents toner remainder of respective colors, use time and condition of all sorts of consumption goods and parts and the like, are stored in a storing section of self-machine. In the image forming apparatus, when trouble occurs, error report information is generated that contains the trouble information and keeping relation information as useful information that specially designates reason of the occurrence of trouble, and a notification scene is made to display in a displaying section that promotes user to confirm that whether or not the error report information may also be sent to management server address with which self-machine is connected through network. Then, in the image forming apparatus, when instruction of permission for sending is obtained through an inputting section from user, the error report information is sent to management server address.

However, in the image forming apparatus, when the error report information is sent to management server address, because user information of apparatus discrimination information, that is previously stored in a storing section of self-machine, is added to the error report information and sent automatically without permission of user, so there is anxiety to leak all sorts of bad information for user.

Patent document 1: Japan patent publication of No. 2008-87487

Like this, in the image forming apparatus, because user information is leaked when permission for sending error report information is selected, user mostly does not select permission. Therefore, in the image forming apparatus, there is a problem that enough error report information for collecting useful information in order to specify reason of all sorts of trouble occurring in apparatus with respect to the management server address, cannot be sent.

### SUMMARY OF THE INVENTION

It is, therefore, an object of the invention to provide an image forming apparatus that can solve the above problem. That is, it is possible for the image forming apparatus to send error report information to management server address without leaking user information when there is no permission of user.
An aspect of the invention is to provide an image forming apparatus that is connected with an external apparatus through network, comprising: an image generating section for generating image data; a storing section for storing history information representing history of apparatus operation on the basis of the generated image data; a trouble detecting section for detecting trouble that occurs in the apparatus; a displaying process section that at least displays a screen of respective items that are contained in history information corresponding to current image data selectively, when trouble is detected; a selection instruction receiving section that receives a selection instruction of respective items from the displayed screen; a generating section that generates trouble report information containing the respective items in the selection instruction; and a sending control section that sends the generated trouble report information to the external apparatus.
The effect of the present invention:

In the image forming apparatus of the present invention, when trouble occurs in the apparatus, because a scene capable of selecting respective items and respective values that are contained in history information corresponding to at least current image data is displayed, user selects and instructs respective items and respective values from the displayed scene, and trouble report information is generated that contains the selected and instructed respective items and respective values, so it is possible to send trouble report information to an external apparatus without leaking user information when there is no permission of user.

The above and other objects and features of the present invention will become apparent from the following detailed description and the appended claims with reference to the accompanying drawings.

### BRIEF DESCRIPTION OF THE DRAWINGS

Fig. 1 is a diagram showing a structure of an image forming system having an image forming apparatus in embodiment 1 of the present invention;
Fig. 2 is a diagram showing a structure of HDD store region 10 in embodiment 1 of the present invention;
Fig. 3 is a diagram showing a structure of a copy setting value information table in embodiment 1 of the present invention;
Fig. 4 is a diagram showing a structure of an apparatus circumstance information table in embodiment 1 of the invention;
Fig. 5 is a diagram showing a structure of an image relation information table in embodiment 1 of the present invention;
Fig. 6 is a diagram showing a structure of all sorts of template files in embodiment 1 of the present invention;
Fig. 7 is a diagram showing a structure of a history information table in embodiment 1 of the present invention;
Fig. 8 is a diagram showing a structure of a copy process use classification item information table in embodiment 1 of the present invention;
Fig. 9 is a diagram showing a structure of a copy process use check item information table in embodiment 1 of the present invention;
Fig. 10 is a first diagram showing an example of an error report use form in embodiment 1 of the present invention;
Fig. 11 is a second diagram showing an example of an error report use form in embodiment 1 of the present invention;
Fig. 12 is a third diagram showing an example of an error report use form in embodiment 1 of the present invention;
Fig. 13 is a fourth diagram showing an example of an error report use form in embodiment 1 of the present invention;
Fig. 14 is a fifth diagram showing an example of an error report use form in embodiment 1 of the present invention;
Fig. 15 is a sixth diagram showing an example of an error report use form in embodiment 1 of the present invention;
Fig. 16 is a flow chart for explaining operation of usual time of image forming apparatus in embodiment 1 of the present invention;
Fig. 17 is a flow chart for explaining operation when trouble occurs in image forming apparatus of embodiment 1 of the present invention;
Fig. 18 is a diagram showing a structure of an image forming system that has an image forming apparatus in embodiment 2 of the present invention;
Fig. 19 is a diagram showing a structure of HDD store region 10a in embodiment 2 of the present invention;
Fig. 20 is a diagram showing a structure of a copy process use check item information table in embodiment 2 of the present invention;
Fig. 21 is a diagram showing a structure of a management user information store table in embodiment 2 of scanner of the present invention;
Fig. 22 is a first diagram showing an example of an error report use form 2 in embodiment 2 of the present invention;
Fig. 23 is a second diagram showing an example of an error report use form 2 in embodiment 2 of the present invention;
Fig. 24 is a third diagram showing an example of an error report use form 2 in embodiment 2 of the present invention;
Fig. 25 is a fourth diagram showing an example of an error report use form 2 in embodiment 2 of the present invention;
Fig. 26 is a first flow chart for explaining operation when trouble occurs in image forming apparatus of embodiment 2 of the present invention;
Fig. 27 is a second flow chart for explaining operation when trouble occurs in image forming apparatus of embodiment 2 of the present invention; and
Fig. 28 is a third flow chart for explaining operation when trouble occurs in image forming apparatus of embodiment 2 of the present invention.

### DETAILED DESCRIPTION OF THE PREFERRED EMBODIMENTS

Embodiments of the invention will be described in detail hereinbelow with reference to the drawings.

### <Embodiment 1>

### <Structure of Embodiment 1>

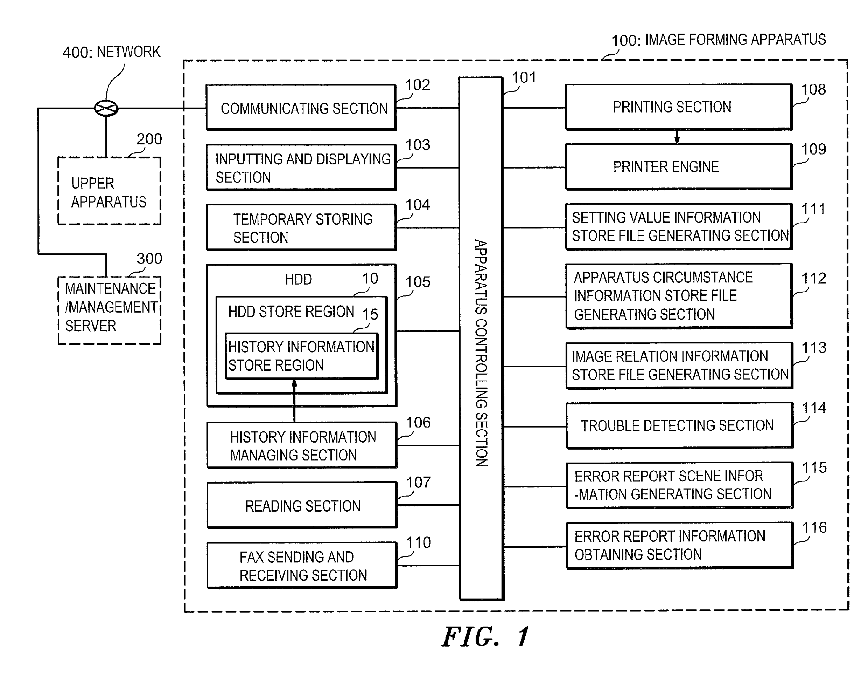

Fig. 1 is a diagram showing a structure of an image forming system having an image forming apparatus 100 in embodiment 1.

An image forming apparatus 100 in embodiment 1 of the present invention, as shown by Fig. 1, is connected to an upper apparatus 200 and a maintenance/management server 300 through network 400. Here, the image forming apparatus 100 is, for example, a MFP (Multi Function Products) that has a printer function, a copy function and a facsimile function and that are introduced to office and the like, and has rented from a rental company managing the maintenance/management server 300.

Further, the upper apparatus 200 is, for example, a PC, a facsimile apparatus or a MFP that has a facsimile function that is used by respective users of office and the like, and is introduced to office and the like, similarly to the image forming apparatus 100.

By the way, in order to perform explanation simply, the image forming apparatus 100 and the upper apparatus 200 are shown every one by Fig. 1, but majority of image forming apparatus and upper apparatus that have the same function as both apparatus have been connected in the network 400.

The image forming apparatus 100 comprises, as shown by Fig. 1, an apparatus controlling section 101 that controls the whole apparatus, a communicating section 102 for communicating with the upper apparatus 200 and the maintenance/management server 300 that are connected through the network 400, an inputting and displaying section 103 that is composed of all sorts of buttons, touch panel display and the like, a temporary storing section 104, a HDD (Hard Disk Drive) 105, a history information managing section 106, a reading section 107, a printing section 108, a printer engine 109, a fax sending and receiving section 110, a setting value information store file generating section 111, an apparatus circumstance information store file generating section 112, an image relation information store file generating section 113, a trouble detecting section 114, an error report scene information generating section 115 and an error report information obtaining section 116.

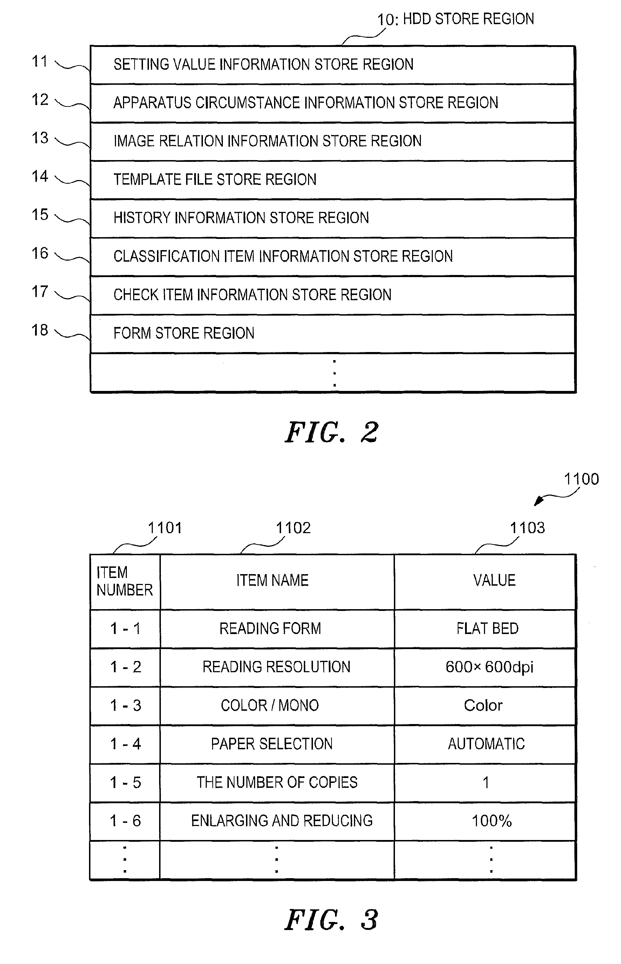

Fig. 2 is a diagram showing a structure of HDD store region 10 that is in a HDD 105 of embodiment 1.

The HDD 105 is a storing apparatus that is equipped in the image forming apparatus 100 itself, as shown by Fig. 2, has a HDD store region 10 containing a setting value information store region 11, an apparatus circumstance information store region 12, an image relation information store region 13, a template file store region 14, a history information store region 15, a classification item information store region 16, a check item information store region 17 and a form store region 18.

Fig. 3 is a diagram showing a structure of a copy setting value information table 1100 that is stored in the setting value information store region 11 of embodiment 1.

The setting value information store region 11 is a store region that stores any of all sorts of setting items and respective setting values that were assigned to printing data that was sent from the upper apparatus 200, or all sorts of setting items and respective setting values that were set when user operated the image forming apparatus 100. The all sorts of setting items are different in every process of printer process, copy process and FAX sending process, and all sorts of setting value information, that is composed of all sorts of setting items and respective setting values that were set on the basis of respective processes, is stored in the setting value information store region 11. That is, when copy process is performed, in the setting value information store region 11, the copy setting value information table 1100 is stored for storing copy setting value information that is composed of all sorts of item names 1102, respective values 1103 and respective item numbers 1101 that are shown by Fig. 3 and that were set on the basis of a copy process instruction from user.

Then, when the printer process is performed, in the setting value information store region 11, a printer setting value information table (not shown) is stored for storing printer setting value information that is composed of all sorts of setting items, respective setting values and respective item numbers that were assigned to printing data that was sent from the upper apparatus 200.

Further, when the FAX sending process is performed, in the setting value information store region 11, a FAX setting value information table (not shown) is stored for storing FAX setting value information that is composed of all sorts of item names, respective values and respective item numbers that contain FAX numbers of FAX sending destination and the like that were set on the basis of a FAX sending instruction from user.

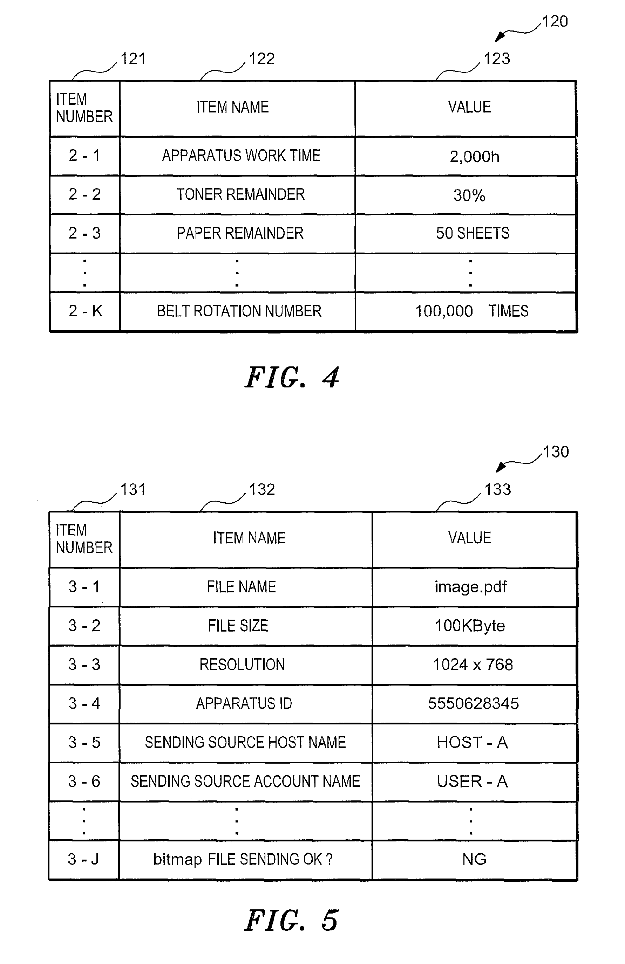

Fig. 4 is a diagram showing a structure of an apparatus circumstance information table 120 that is stored in the apparatus circumstance information store region 12 in embodiment 1.

The apparatus circumstance information store region 12 is, as shown by Fig. 4, a store region for storing apparatus circumstance information that represents using condition of the image forming apparatus 100 of work time of apparatus that was counted by timer (not shown) of the image forming apparatus 100 (apparatus work time), remain number of paper in paper tray (not shown) of the apparatus (paper remainder sheet number), toner remainder in respective color toner cartridges, use times of photosensitive drum (drum use times), rotation number of transfer belt (belt rotation number) and the like. That is, in the apparatus circumstance information store region 12, a apparatus circumstance information table 120 is stored for storing apparatus circumstance information that is composed of all sorts of item names 122, respective values 123 and respective item numbers 121 that are shown by Fig. 4 and that represent using condition of the image forming apparatus 100.

Here, the paper remainder sheet number in the paper tray is detected, for example, by paper remainder sheet number detection sensor that was furnished in the paper tray. Then, the toner remainder of the respective colors is detected, for example, by toner sensor that was furnished in toner tank of the toner cartridges of respective colors. Further, the drum use times is calculated, for example, by using function that counts drive times of the photosensitive drum in the printing section 108. Furthermore, the belt rotation number is calculated, for example, by using function that counts rotation number of transfer belt in the printing section 108.

Fig. 5 is a diagram showing a structure of an image relation information table 130 that is stored in the image relation information store region 13 in embodiment 1.

The image relation information store region 13 is, as shown by Fig. 5, a store region for storing image relation information that is information relating with image data that was generated on the basis of the print data obtained from the upper apparatus 200, or image data that was generated by using scanner in the reading section 107 to read manuscript through user's operation of the image forming apparatus 100. That is, in the image relation information store region 13, an image relation information table 130 is stored for storing image relation information that is composed of all sorts of item names 132, respective values 133 and respective item numbers 131 that are shown by Fig. 5 and that relate with the image data.

Here, in the image relation information, as shown by Fig. 5, there are also a manufacture ID of apparatus (apparatus manufacture ID) that was previously set in memory (not shown) through maker manufacturing the image forming apparatus 100, a host name of the upper apparatus 200 sending the image data (sending source host name), a user name operating the apparatus (sending source account name) and the like.

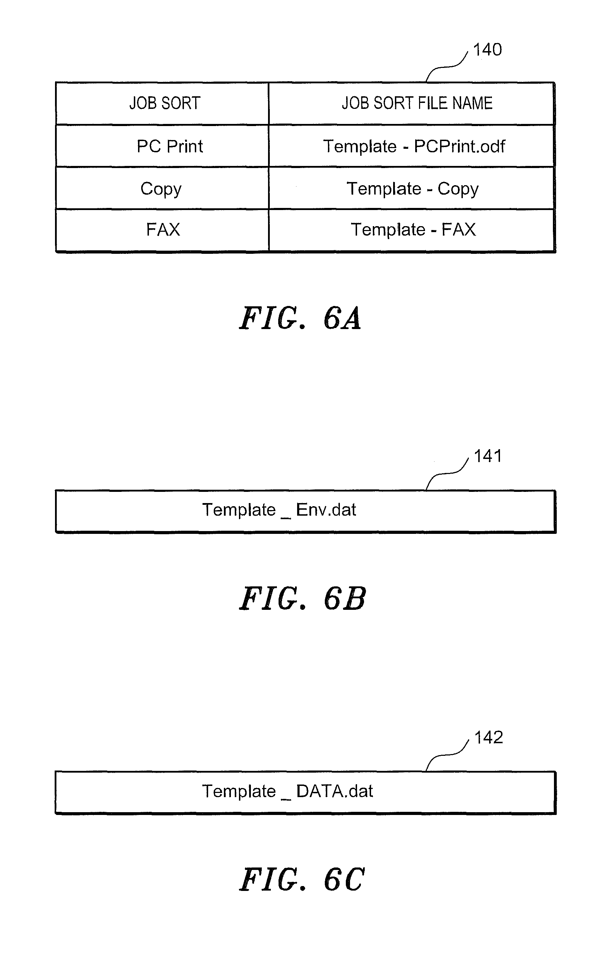

Fig. 6 is a diagram showing a structure of all sorts of template files that are stored in the template file store region 14 of embodiment 1.

The template file store region 14 is, as shown by Fig. 6, a store region for storing all sorts of template files that were previously set through maker manufacturing the image forming apparatus 100. That is, in the template file store region 14, as shown by Fig. 6A, a setting value information store file use table 140 is stored that is composed of the sort of all sorts of jobs stated later of the image forming apparatus 100 and setting value information store template file of job sort that is used by dividing every job sort.

Here, in the case that job sort=PCPrint, the setting value information store template file of job sort, that is used in the time of generating setting value information store file stated later in the setting value information store file generating section 111, is "Template_PCPrint.dat". Further, in the case that job sort=Copy, "Template_Copy.dat" is used. Furthermore, in the case that job sort=FAX, "Template_FAX.dat" is used. In these respective sorts of template files, respective item names and respective item numbers that correspond to respective sorts of setting value information are previously set, and then respective values corresponding to respective item names become blank.

Then, in the template file store region 14, as shown by Fig. 6B, apparatus circumstance information store template file "Template_Env.dat", that is used in the time of generating apparatus circumstance information store file stated later in the apparatus circumstance information store file generating section 112, is stored in a apparatus circumstance information store file use table 141. In the apparatus circumstance information store template file, respective item names and respective item numbers that correspond to apparatus circumstance information are previously set, and then respective values corresponding to respective item names become blank.

Further, in the template file store region 14, as shown by Fig. 6C, image relation information store template file "Template_DATA.dat", that is used in the time of generating image relation information store file stated later in the image relation information store file generating section 113, is stored in an image relation information store file use table 142. In the image relation information store template file, respective item names and respective item numbers that correspond to image relation information are previously set, and then respective values corresponding to respective item names become blank.

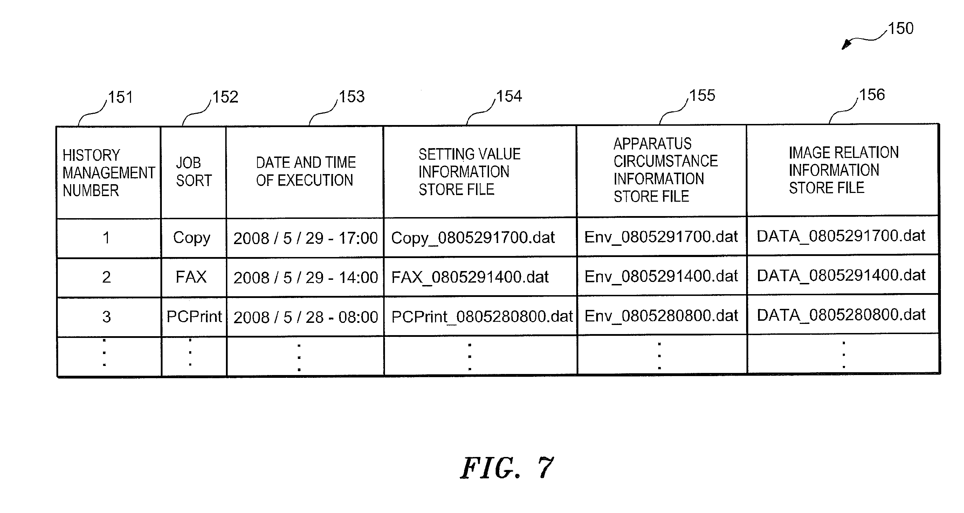

Fig. 7 is a diagram showing an example of a structure of a history information table 150 that is stored in the history information store region 15.

The history information store region 15 is a store region for storing history information representing operation history of the image forming apparatus 100. That is, in the history information store region 15, as shown by Fig. 7, a history information table 150 is stored for storing history information that is composed of a history management number 151, a job sort 152, an date and time of execution 153 representing time in which respective jobs are executed, a setting value information store file 154, an apparatus circumstance information store file 155 and an image relation information store file 156.

Here, the date and time of execution 153 is time that is represented by timer (not shown) in the apparatus controlling section 101 when the image forming apparatus 100 completed the process on the basis of respective jobs. The date and time of execution 153 is obtained on the basis of operation stated later of the apparatus controlling section 101.

Further, in respective history information, if trouble occurs when the image forming apparatus 100 executes the corresponding job, trouble information representing trouble content is assigned as an additional item. Furthermore, in the history information table 150, it is possible to store history information of the number of fixed values that was previously set, when the stored history information exceeds the number of fixed values, with registration of new history information, history information is destroyed from old history information in order. Then, the history information table 150 stores, as shown by Fig. 7, the history information by renewing the history management number 151 at any time so that the new history information becomes No. 1 according to a rise order.

The setting value store file 154 is a file in which setting value of every job is stored that is generated by the setting value information store file generating section 111. The setting value store file 154 is generated by using any of one file of "Template_PCPrint.dat", "Template_Copy.dat" and "Template_FAX.dat" that are contained in job sort setting value information store template file shown by Fig. 6A that is stored in the template file store region 14, and is formed from file name that contains the date and time of execution 153. Here, in the setting value information store file 154, the setting value information is stored that was stored in the setting value information store region 11.

The apparatus circumstance information store file 155 is file in which apparatus circumstance information of time is stored in which respective jobs are executed that are generated by the apparatus circumstance information store file generating section 112. The apparatus circumstance information store file 155 is generated by using apparatus circumstance information store template file "Template_Env.dat" shown by Fig. 6B that is stored in the template file store region 14, and is formed from file name that contains the date and time of execution 153. Here, in the apparatus circumstance information store file 155, the apparatus circumstance information is stored that was stored in the apparatus circumstance information store region 12.

The image relation information store file 156 is file in which image relation information is stored that contains image data of every of respective jobs generated by the image relation information store file generating section 113. The image relation information store file 156 is generated by using image relation information store template file "Template_DATA.dat" shown by Fig. 6C that is stored in the template file store region 14, and is formed from file name that contains the date and time of execution 153. Here, in the image relation information store file 156, the image relation information is stored that was stored in the image relation information store region 13.

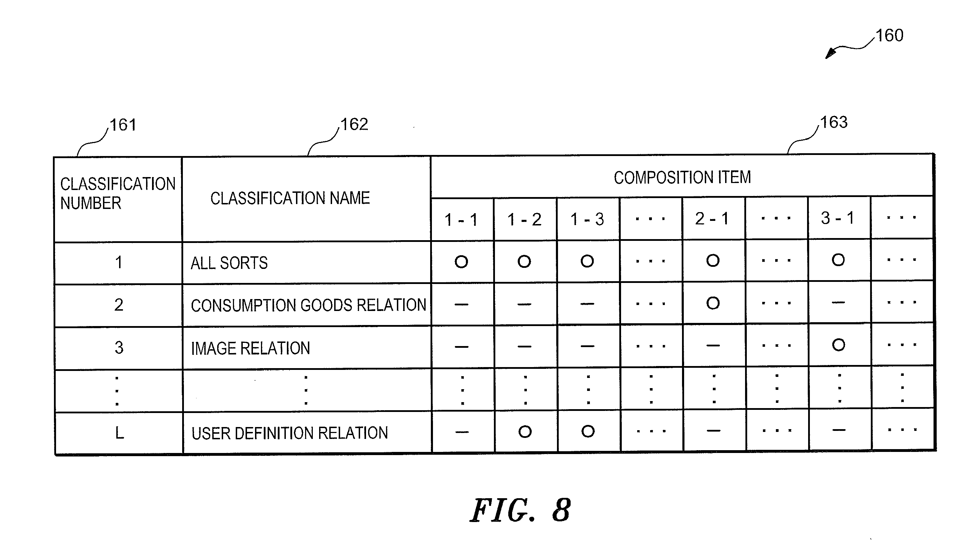

Fig. 8 is a diagram showing a structure of a copy process use classification item information table 160 that is stored in the classification item information store region 16.

The classification item information store region 16 is a store region for storing classification item information of job sort representing correspondence of classification name for classifying all the item names in the error report use form stated later and item number that is contained in each sort. The classification item information of job sort has been set previously through maker manufacturing the image forming apparatus 100. That is, in the classification item information store region 16, a copy process use classification item information table 160 is stored that is composed of a classification management number 161, a classification name 162 and a composition item 163 that are shown in Fig. 8 that is used when copy is processed.

Here, in the composition item corresponding to the respective classification names, " ○ " is stored in the row of corresponding item number, and "-" is stored in the item that is not corresponding. Further, because a classification of putting information relating to consumption goods into classification of consumption goods relation is performed as shown by Fig. 8, so it is easy to select item in the case that user corresponds to error report scene information that is represented in touch panel display in the inputting and displaying section 103.

Then, in the classification item information store region 16, a printer process use classification item information table (not shown) is stored that is composed of a classification management number that is used when printer is processed, a classification name and a composition item.

Further, in the classification item information store region 16, a FAX process use classification item information table (not shown) is stored that is composed of a classification management number that is used when FAX sending is processed, a classification name and a composition item.

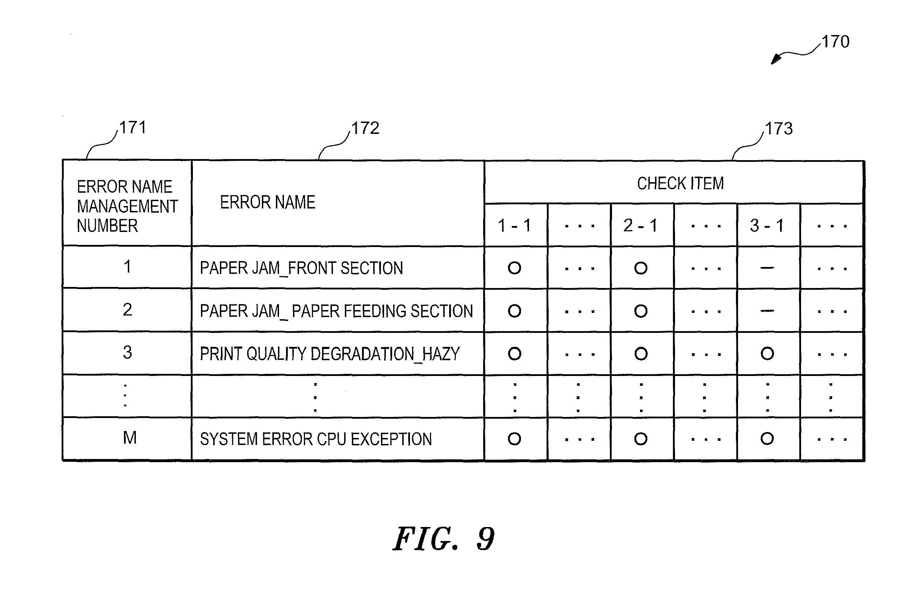

Fig. 9 is a diagram showing a structure of a copy process use check item information table 170 that is stored in the check item information store region 17.

The check item information store region 17 is a store region for storing check item information of job sort and error sort to make items in which check marks have been previously automatically inputted into check box stated later that correspond to respective item names, to correspond to error sort because items are different that should be contained in the error report information that is sent to the maintenance/management server 300 corresponding to all sorts of trouble that occurs in the operation of job sort and the operation time of the image forming apparatus 100. The check item information of error sort of every job sort has been previously set through maker manufacturing the image forming apparatus 100. That is, in the check item information store region 17, as shown by Fig. 9, a copy process use check item information table 170 is stored that is composed of an error name management number 171 that is used when copy is processed, an error name 172 and a check item 173. Here, in the check item corresponding to respective error names, "O" is stored in the row of corresponding check item, and "-" is stored in the item that is not corresponding.

Then, in the check item information store region 17, a printer process use check item information table (not shown) is stored that is composed of an error name management number that is used when printer is processed, an error name and a check item.

Further, in the check item information store region 17, a FAX process use check item information table (not shown) is stored that is composed of an error name management number that is used when FAX sending is processed, an error name and a check item.

In the form store region 18, an error report use form is stored that is used when error report scene information is generated in the error report scene information generating section 115 that was previously set through maker manufacturing the image forming apparatus 100.

Next, it is to explain a controlling structure of the image forming apparatus 100.

The apparatus controlling section 101, after received print data from the upper apparatus 200 through the communicating section 102, stores "job sort =Print" in the temporary storing section 104; and instruct a rasterize changing section (not shown) to perform a rasterize changing. Here, in the print data, all sorts of setting value information such as " paper size", "print number" and the like that were set by user in the upper apparatus 200, has been assigned, and the setting value information is stored as printer setting value information in the setting value information store region 11 of HDD 105 on the basis of program that was stored in memory (not shown) of the image forming apparatus 100. Further, the communicating section 102 has serial interface such as USB (Universal Serial Bus) and has parallel interface such as IEEE 1284 and the like for notifying the upper apparatus of receiving print data and process result of the received print data from the upper apparatus 200, and then is connected with the upper apparatus 200 and the maintenance/management server 300 in fixed protocol of respective interfaces.

The rasterize changing section (not shown) of the image forming apparatus 100, after received the instruction of rasterize changing, changes print data that was obtained from the upper apparatus 200 into image data. Then, after the rasterize changing section generates the image data, the apparatus controlling section 101 stores the image data as image relation information in the image relation information store region 13. Here, in the image relation information, file size of the image data, apparatus ID of the image forming apparatus 100 generating the image data, file of the image data and the like are contained.

On the other hand, when user sets manuscript in the scanner that is provided by the reading section 107, and presses "copy" button (not shown) in the inputting and displaying section 103, the apparatus controlling section 101 stores "job sort=Copy" in the temporary storing section 104. Then, the apparatus controlling section 101, after stored the job sort, instructs the scanner to read the image. The scanner, after obtained the instruction of reading image on the basis of the setting value information such as read resolution and the like that were set by user through the inputting and displaying section 103, generates image data by reading the manuscript. The setting value information is stored as copy setting value information in the setting value information store region 11 of HDD 105 on the basis of the program (not shown) of the image forming apparatus 100.

Further, after user presses "fax" button, the apparatus controlling section 101 stores "job sort=FAX" in the temporary storing section 104. Then, the apparatus controlling section 101, after stored the job sort, instructs the scanner to read image. The scanner, after obtained the instruction of reading image on the basis of the setting value information such as read resolution and the like that were set by user through the inputting and displaying section 103, generates image data by reading the manuscript. In the setting value information, FAX number of FAX sending destination and the like are also contained, and are stored as FAX setting value information in the setting value information store region 11 of HDD 105 on the basis of the program (not shown) of the image forming apparatus 100.

After the scanner generates the image data, the apparatus controlling section 101 stores the image data as image relation information in the image relation information store region 13.

Then, the apparatus controlling section 101, after stored the setting value information and the image relation information, in the case that job sort that is stored in the temporary storing section 104 is "PCPrint" or "Copy", instructs the printing section 108 to print.

On the other hand, the apparatus controlling section 101, in the case that job sort that is stored in the temporary storing section 104 is "FAX", instructs the fax sending and receiving section 110 to send fax.

The printing section 108 is a part that controls print process on the basis of image data, and controls respective parts that form printer engine 109. That is, the printing section 108, after obtained the instruction of print process, transfers print instruction signal that instructs to start print, setting value information that is stored in the setting value information store region 11 of HDD 105 and image relation information that is stored in the image relation information store region 13 to the printer engine 109.

The printer engine 109 is a part that executes print process on the basis of image data, after obtained setting value information and image relation information together with print instruction signal, performs print process by using image relation information "image data" on the basis of the setting value information "paper size, print number and the like". Here, the printing section 108 performs print control through the printer engine 109; and respective values of apparatus circumstance information such as apparatus work time that is stored in the apparatus circumstance information store region 12 of the HDD 105, toner remainder of respective colors, paper remainder sheet number, drum rotation number, belt rotation number and the like, are renewed.

After the printer engine 109 performs the print process on the basis of the setting information, print medium is printed to output from an ejecting mouth (not shown) of the image forming apparatus 100. Then, the printing section 108, after detected that the printer engine 109 is stopped on the basis of print process completion, generates print process completion signal, and then sends it to the apparatus controlling section 101.

The fax sending and receiving section 110 is a part for performing fax communicating with the upper apparatus 200 having a facsimile function, after obtained setting value information and image relation information together with instruction of fax sending, fax sends the image relation information to the corresponding opponent on the basis of the setting value information "fax sending destination information". Then, the fax sending and receiving section 110, after detected that fax sending to opponent is completed, generates fax sending completion signal, and then sends it to the apparatus controlling section 101. Here, after the fax sending and receiving section 110 receives image data from the upper apparatus 200 having a facsimile function through the communicating section 102, the image data is outputted to print through drive of the printer engine 109 on the basis of the control of the apparatus controlling section 101 and the printing section 108.

The apparatus controlling section 101, after received any one of signal of the print process completion signal or the fax sending completion signal, obtains time that is represented by timer (not shown) in the apparatus controlling section 101 as date and time of execution that represents job completion, and then stores the date and time of execution in the temporary storing section 104.

On the other hand, the apparatus controlling section 101, after received process stoppage signal stated later, obtains time that is represented by timer (not shown) in the apparatus controlling section 101 as date and time of execution that stops the process, and stores the date and time of execution in the temporary storing section 104.

Then, the apparatus controlling section 101, after stored the date and time of execution, instructs the setting value information store file generating section 111 to generate setting value information store file, instructs the apparatus circumstance information store file generating section 112 to generate apparatus circumstance information store file, and instructs the image relation information store file generating section 113 to generate image relation information store file.

The setting value information store file generating section 111, after received the instruction of generating the setting value information store file, firstly, searches setting value information store template file of corresponding job sort from all sorts of setting value information store template files that are stored in the template file store region 14 of the HDD 105 on the basis of "job sort" that is stored in the temporary storing section 104.

Then, the setting value information store file generating section 111, after searched the corresponding file, generates setting value information store file containing setting value information that was stored in the setting value information store region 11 of the HDD 105 by using the file. Here, as shown by Fig. 7, file name of the generated setting value information store file is, for example, "Copy_0805291700.dat" containing "date and time of execution=2008/5/29_17:00" that was stored in the temporary storing section 104.

The apparatus circumstance information store file generating section 112, after received the instruction of generating the apparatus circumstance information store file, generates apparatus circumstance information store file containing apparatus circumstance information that was stored in the apparatus circumstance information store region 12 by using apparatus circumstance information store template file that was stored in the template file store region 14 of the HDD 105. Here, as shown by Fig. 7, file name of the generated apparatus circumstance information store file is, for example, "Env_0805291700.dat" containing "date and time of execution=2008/5/29_17:00" that was stored in the temporary storing section 104.

The image relation information store file generating section 113, after received the instruction of generating the image relation information store file, generates image relation information store file containing image relation information that was stored in the image relation information store region 13 by using image relation information store template file that was stored in the template file store region 14 of the HDD 105. Here, as shown by Fig. 7, file name of the generated image relation information store file is, for example, "DATA_0805291700.dat" containing "date and time of execution=2008/5/29_17:00" that was stored in the temporary storing section 104.

After the setting value information store file, the apparatus circumstance information store file and the image relation information store file are generated, the apparatus controlling section 101 stores these respective store files in the temporary storing section 104. Then, the apparatus controlling section 101, after stored the respective store files, transfers instruction of newly registering history information, "job sort" and "date and time of execution" that were stored in the temporary storing section 104, "setting value information store file", "apparatus circumstance information store file" and "image relation information store file" to the history information managing section 106.

The history information managing section 106 is a part that performs the process of newly registering new history information into the history information table 150 storing in the history information store region 15 of the HDD 105. That is, the history information managing section 106, after received the instruction of newly registering history information, the "job sort", the "date and time of execution", the "setting value information store file", the "apparatus circumstance information store file" and the "image relation information store file", newly register the history information that is composed of these information in the history information table 150 that is shown by Fig. 7. Here, in the history information table, whenever new history information is registered, the history information is stored so that the new history information becomes No. 1 according to a rise order. Further, in the history information table, when new history information is stored, as shown by Fig. 7, history information numbers of a rise order are assigned and managed automatically.

After the history information managing section 106 completes the process of newly registering new history information, the apparatus controlling section 101 shifts job waiting condition.

Next, it is to explain a structure of respective parts of apparatus that operates in the case that error occurs in the image forming apparatus 100.

The trouble detecting section 114 is a detecting section that is set in respective parts for detecting trouble that occurs in respective parts of self-body of the image forming apparatus 100, and has respective trouble detection sensors and respective trouble judging sections (not shown). That is, the trouble detecting section 114, after detected respective trouble that occurs in respective parts through respective trouble detection sensors and respective trouble judging sections, outputs trouble detection signal that assigned error name representing content of respective trouble corresponding to respective parts. Here, trouble that is detected by the trouble detecting section 114 are, for example, as shown by Fig. 9, an error "paper jam_ front section" caused by paper jam occurring in front section, an error "paper jam_ paper feeding section" caused by paper jam occurring in paper feeding section, an error "print quality degradation_hazy" caused by print quality degradation due to hazy, a system error "system error CPU exception" caused by injustice command and the like.

After the trouble detecting section 114 outputs the trouble detection signal, the apparatus controlling section 101 stores error name that was assigned to the signal in the temporary storing section 104. Then, apparatus controlling section 101, after stored the error name, performs an instruction of stopping the printer engine 109 in the printing section 108; and instructs the error report scene information generating section 115 to generate error report scene information.

The error report scene information generating section 115 is a part that generates error report use scene information to represent in the touch panel in the inputting and displaying section 103. That is, the error report scene information generating section 115, after received the instruction of generating the error report use scene information, firstly, obtains all the item numbers, all the item names and respective values of setting value information that was stored in the setting value information store region 11, apparatus circumstance information that was stored in the apparatus circumstance information store region 12, image relation information that was stored in the image relation information store region 13 of the HDD 105.

Then, the error report scene information generating section 115, after received all the item numbers, all the item names and respective values, searches the corresponding table from all sorts of classification item information tables that were stored in the classification item information store region 16 of the HDD 105 on the basis of job sort, and classifies all the item numbers, all the item names and respective values on the basis of the classification item information that is stored in the table.

Further, the error report scene information generating section 115, after classified all the item numbers, all the item names and respective values, searches the corresponding table from all sorts of check item information tables that were stored in the check item information store region 17 on the basis of job sort that is stored in the temporary storing section 104. Then, the error report scene information generating section 115 searches check item information that is stored in the table on the basis of error name that is stored in the temporary storing section 104, and obtains item number in order to previously input check mark corresponding to the error name.

Then, the error report scene information generating section 115, after obtained the item number in order to previously input check mark, assigns check mark sign=1 that represents check mark input into a corresponding item number, and assigns check mark sign=0 that represents unnecessary check mark input into an item number that is not corresponding.

The error report scene information generating section 115, after assigned check mark sign into all item numbers, generates an error report use form on the basis of the check mark sign, all the item numbers, all the item names and respective values by using the error report use template form that is stored in the form store region 18 of the HDD 105. After the error report use form is generated, the error report use form is displayed in the touch panel display in the inputting and displaying section 103 through a control of the apparatus controlling section 101. Hereinafter, it is to explain the error report use form in detail.

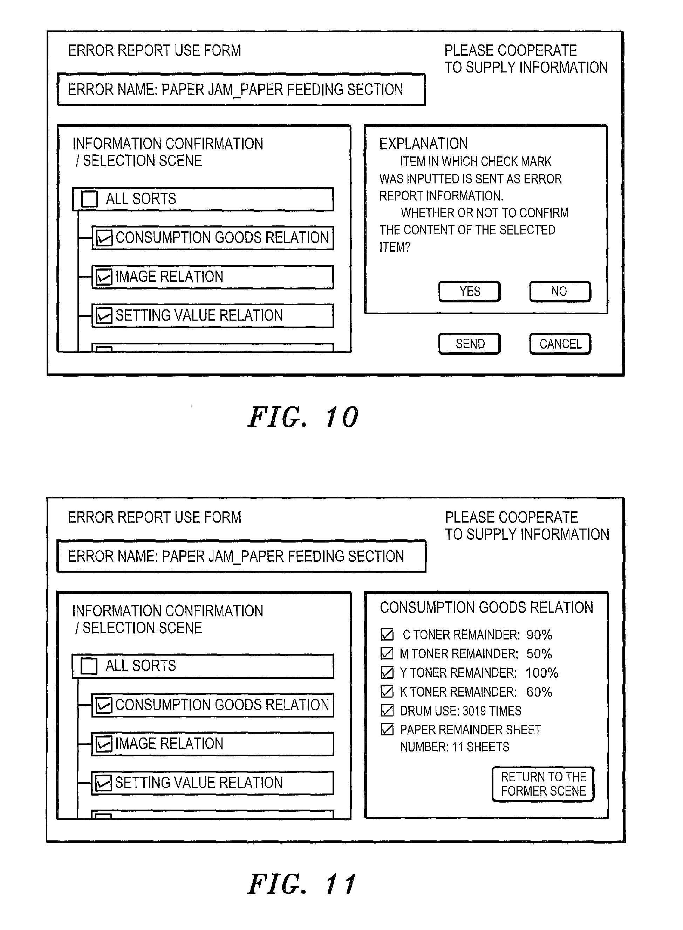

Fig. 10 is a first diagram showing an example of an error report use form.

In the error report use form, on the basis of the program that is stored in memory (not shown) of the image forming apparatus 100, as shown by Fig. 10, a check box is automatically displayed that corresponds to respective classification names such as "all sorts", "consumption goods relation", "image relation", "setting value relation" and the like.

In the error report use form, that is displayed as an initial scene shown by Fig. 10, the classification names, an error name, an explanation of the error report information, a "send" button and a "cancel" button are displayed. Here, with respect to the explanation of the error report information, as shown by Fig. 10, with respect to user, an item, in which check mark is inputted, is sent as error report information, and an instruction of confirmation/selection of sending item is notified; and "yes" and "no" buttons are displayed for receiving the instruction from user.

Fig. 11 is a second diagram showing an example of an error report use form in embodiment 1.

After user presses the "yes" button of the error report use form that is shown by Fig. 10, for example, after "consumption goods relation" is active, the error report scene information generating section 115 generates an error report use form in which respective items and respective values of the consumption goods relation, and check boxes that correspond to respective items are displayed as shown by Fig. 11. Here, in respective check boxes, a check mark is inputted only with respect to an item whose check mark sign =1. For example, as shown by Fig. 1, even if check marks are inputted in all check boxes, in the case that one item does not want to be sent as error report information, user removes the check mark of the check box corresponding to the corresponding item by operating the error report use form with finger and the like in which error report scene information is contained that is displayed in the inputting and displaying section 103. Whenever check marks of the check boxes corresponding to respective items are inputted or removed, check mark signs that have been assigned to respective items change into 1 or 0.

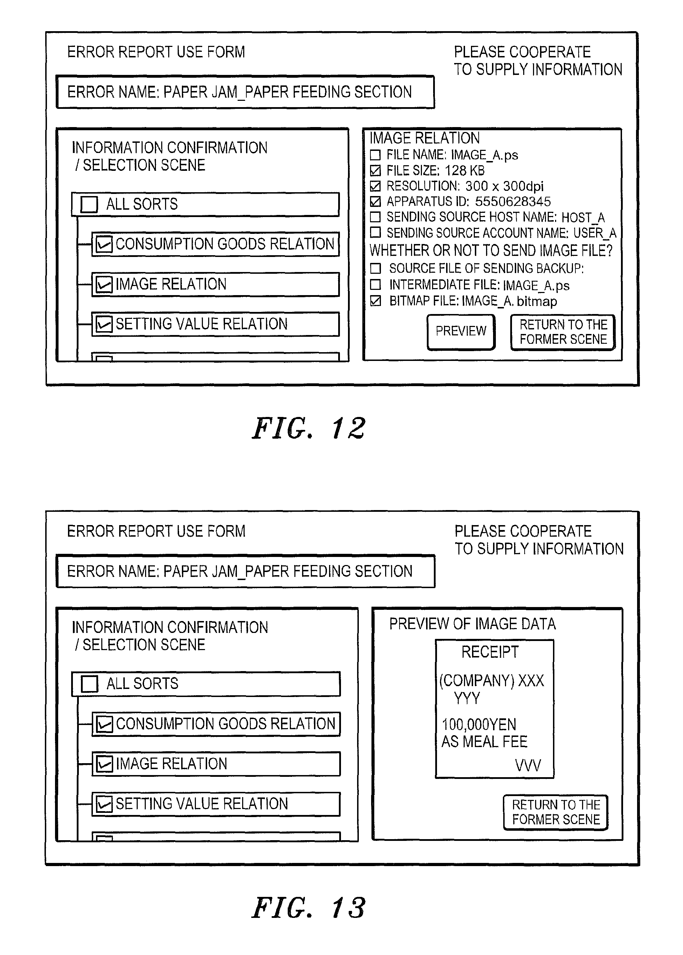

Fig. 12 is a third diagram showing an example of an error report use form in embodiment 1; and Fig. 13 is a fourth diagram showing an example of an error report use form in embodiment 1.

For example, after user makes "image relation" of the form that is shown by Fig. 11 active, the error report scene information generating section 115 generates an error report use form in which respective items and respective values of the image relation, and check boxes that correspond to respective items are displayed as shown by Fig. 12. In the error report use form that is shown by Fig. 12, respective items and respective values of the image relation, check boxes that correspond to respective items, a question sentence whether or not to send image file and a "preview" button capable of previewing image data are displayed. After user presses the "preview" button, a preview scene of image data is displayed, as shown by Fig. 13, in the error report use form. Here, in the case that there is a secret in which image data, that is displayed by the preview, should not be sent to the maintenance/management server 300 outside of company as shown by Fig. 13, user presses "return to the former scene" button of the form, but does not input check mark in the check box that corresponds to an item of, for example, Bitmap file that contains preview content of the image data in the error report use form shown by Fig. 12.

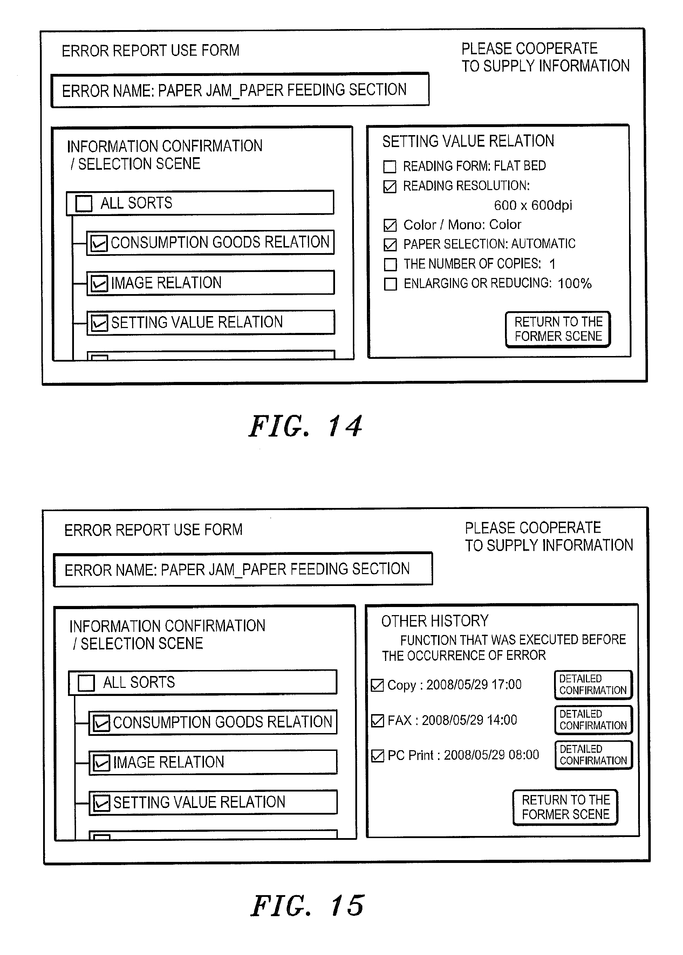

Fig. 14 is a fifth diagram showing an example of an error report use form in embodiment 1.

For example, after user makes "setting value relation" of the form that is shown by Fig. 12 active, the error report scene information generating section 115 generates an error report use form in which respective items and respective values of the setting value relation, and check boxes that correspond to respective items are displayed as shown by Fig. 14.

Fig. 15 is a sixth diagram showing an example of an error report use form in embodiment 1.

For example, after user makes "other history" (not shown) that is displayed as classification name of the form that is shown by Fig. 14 active, as other history, for reporting plural history information that is executed just before the occurrence of the present process as error report information, the error report scene information generating section 115 obtains number of history information that was set previously according to a rise order in the history information that has been stored in the history information table 150 of the HDD 105 through the apparatus controlling section 101. Then, the error report scene information generating section 115, after obtained the plural history information, displays job sort and date and time of execution of respective history information and check boxes that correspond to respective history information in the error report use form as shown by Fig.15. Here, in respective other history shown by Fig. 15, "detailed confirmation" buttons are displayed for displaying detail of respective history information correspondingly, through pressing respective "detailed confirmation" buttons, it is possible to confirm detailed content of respective history information.

One the one hand, after user pressed "send" button of the error report use form shown by Fig. 10, the apparatus controlling section 101 instructs the error report information obtaining section 116 to obtain error report information.

On the other hand, after user pressed "cancel" button of the error report use form shown by Fig. 10, the apparatus controlling section 101 stops generation process of the error report use form in the error report scene information generating section 115, and generates new registration of the history information in the history information managing section 106.

The error report information obtaining section 116, after received the instruction of the obtaining of the error report information, obtains error report information that contains respective items and respective values that correspond to check mark sign=1 in the error report use form, and sends it to the maintenance/management server 300 through the apparatus controlling section 101.

The apparatus controlling section 101, after sent the error report information to the maintenance/management server 300, instructs the history information managing section 106 to newly register the history information. In the history information that has been newly registered, trouble information that contains error name and the like that represent that trouble occurred, has been assigned. After the history information managing section 106 completes the new registration of the history information, the apparatus controlling section 101 shifts the job waiting condition.

### <Operation of Embodiment 1>

Next, it is to explain operation of the image forming apparatus 100 in embodiment 1 of the present invention.

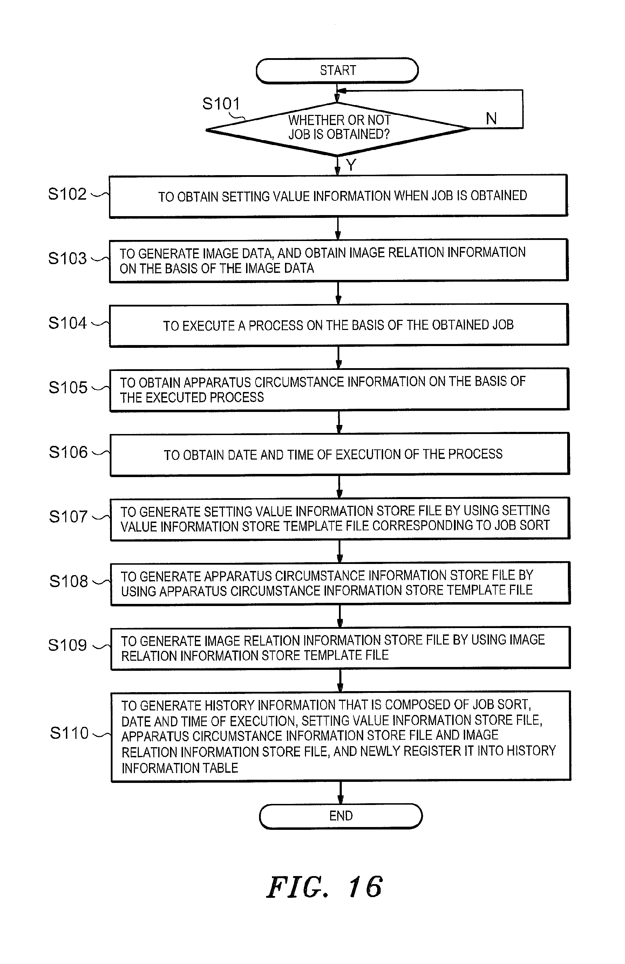

Fig. 16 is a flow chart for explaining operation of usual time of image forming apparatus in embodiment 1.

Firstly, it is to explain an example in the case that user who operates the image forming apparatus 100 pressed a "copy" button, and explains operation to which history information has been stored in the history information store region 15 of the HDD 105 on the basis of the copy process by using Fig. 16.

After user sets manuscript in a scanner in the reading section 107, and presses the "copy" button (not shown) in the inputting and displaying section 103 (Step S101), the apparatus controlling section 101 stores "job sort=Copy" in the temporary storing section 104. Then, the apparatus controlling section 101, after stored the job sort, instructs the scanner to read image. The scanner, after received the instruction of reading image on the basis of the setting value information of read resolution and the like that were set previously by user through the inputting and displaying section 103, generates image data by reading the manuscript. The setting value information is stored as copy setting value information in the setting value information store region 11 of the HDD 105 on the basis of the program (not shown) of the image forming apparatus 100 (Step S102).

After the scanner generates image data, the apparatus controlling section 101 stores the image data as image relation information in the image relation information store region 13 (Step S103).

Then, the apparatus controlling section 101, after stored the setting value information and the image relation information, instructs the printing section 108 to print because the job sort that is stored in the temporary storing section 104 is "Copy".

The printing section 108, after received the instruction of the print process, transfers print instruction signal that instructs to start print, the setting value information that is stored in the setting value information store region 11 of the HDD 105 and the image relation information that is stored in the image relation information store region 13 to the printer engine 109.

The printer engine 109, after received the print instruction signal, the setting value information and the image relation information, performs print process by using the image relation information "image data" on the basis of the setting value information "paper size, the number of print copies and the like" (Step S104). At this time, the printing section 108 performs print control through the printer engine 109; and respective values of the apparatus circumstance information such as apparatus work time that is stored in the apparatus circumstance information store region 12 of the HDD 105, toner remainder of respective colors, paper remainder sheet number, drum rotation number, belt rotation number and the like, are renewed (Step S105).

After the printer engine 109 performed the print process on the basis of the setting information, print medium is printed to output from an ejecting mouth (not shown) of the image forming apparatus 100. Then, the printing section 108, after detected that the printer engine 109 was stopped on the basis of print process completion, generates a print process completion signal, and sends the signal to the apparatus controlling section 101.

The apparatus controlling section 101, after received the print process completion signal, obtains information of date and time that timer (not shown) in the image forming apparatus 100 represents as "date and time of execution=2008/5/29_17:00" that represents job completion (Step S106), and stores the date and time of execution in the temporary storing section 104.

Then, the apparatus controlling section 101, after stored the date and time of execution, instructs the setting value information store file generating section 111 to generate setting value information store file, instructs the apparatus circumstance information store file generating section 112 to generate apparatus circumstance information store file, and instructs the image relation information store file generating section 113 to generate image relation information store file.

The setting value information store file generating section 111, after received the instruction of generating the setting value information store file, firstly, searches a copy use setting value information store template file from all sorts of setting value information store template files that are stored in the template file store region 14 of the HDD 105 on the basis of the "job sort=Copy" that is stored in the temporary storing section 104.

Then, the setting value information store file generating section 111, after searched the copy use setting value information store template file, generates a setting value information store file that contains copy setting value information that is stored in the setting value information store region 11 of the HDD 105 by using the file (Step S107). At this time, as shown by Fig. 7, the file name of the generated setting value information store file is, for example, "Copy_0805291700.dat" that contains the "date and time of execution=2008/5/29_17:00", that is stored in the temporary storing section 104.

The apparatus circumstance information store file generating section 112, after received the instruction of generating the apparatus circumstance information store file, generates an apparatus circumstance information store file containing apparatus circumstance information that is stored in the apparatus circumstance information store region 12 by using the apparatus circumstance information store template file that is stored in the template file store region 14 of the HDD 105 (Step S108). At this time, as shown by Fig.7, the file name of the generated apparatus circumstance information store file is, for example, "Env_0805291700.dat" that contains the "date and time of execution=2008/5/29_17:00", that is stored in the temporary storing section 104.

The image relation information store file generating section 113, after received the instruction of generating the image relation information store file, generates an image relation information store file containing image relation information that is stored in the image relation information store region 13 by using the image relation information store template file that is stored in the template file store region 14 of the HDD 105 (Step S109). At this time, as shown by Fig. 7, the file name of the generated image relation information store file is, for example, "DATA_0805291700.dat" that contains the "date and time gf execution=2008/5/29_17:00", that is stored in the temporary storing section 104.

After the setting value information store file, the apparatus circumstance information store file and the image relation information store file are generated, the apparatus controlling section 101 stores these respective store files in the temporary storing section 104. Then, the apparatus controlling section 101, after stored these respective store files, transfers the instruction of the new registration of the history information, the "job sort" and the "date and time of execution" that are stored in the temporary storing section 104, the "setting value information store file", the "apparatus circumstance information store file" and the "image relation information store file" to the history information managing section 106.

The history information managing section 106, after received the instruction of the new registration of the history information, the "job sort", the "date and time of execution", the "setting value information store file", the "apparatus circumstance information store file" and the "image relation information store file", newly registers the history information that is composed of these information into the history information table 150 shown by Fig. 7 (Step S110). At this time, because the newly registered history information is stored so that it becomes No. 1 according to a rise order in the history information table 150, so a history information number=1 is assigned.

After the history information managing section 106 completes the new registration process of the new history information, the apparatus controlling section 101 shifts the job waiting condition. Thus, the operation based on one job is completed in the image forming apparatus 100.

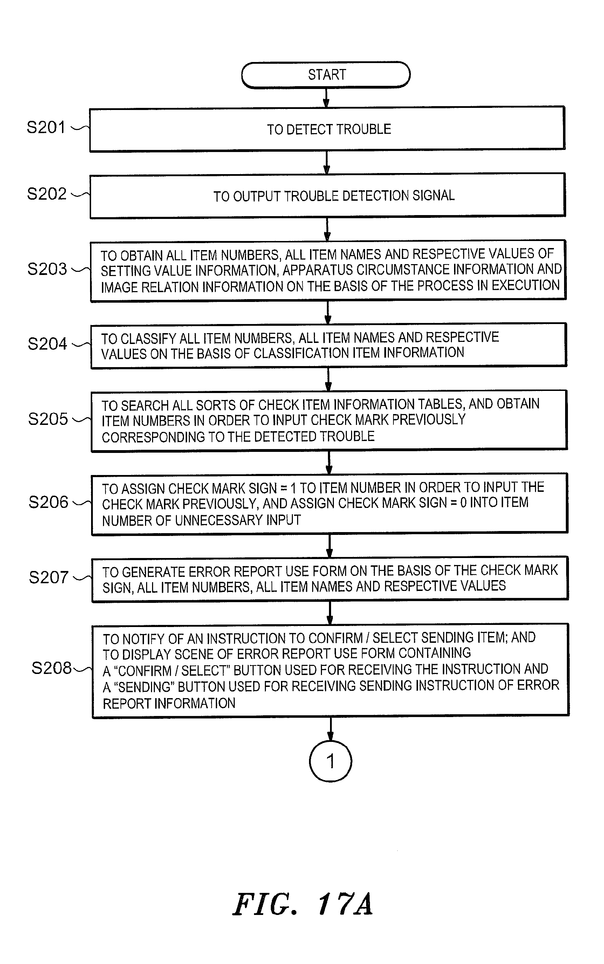

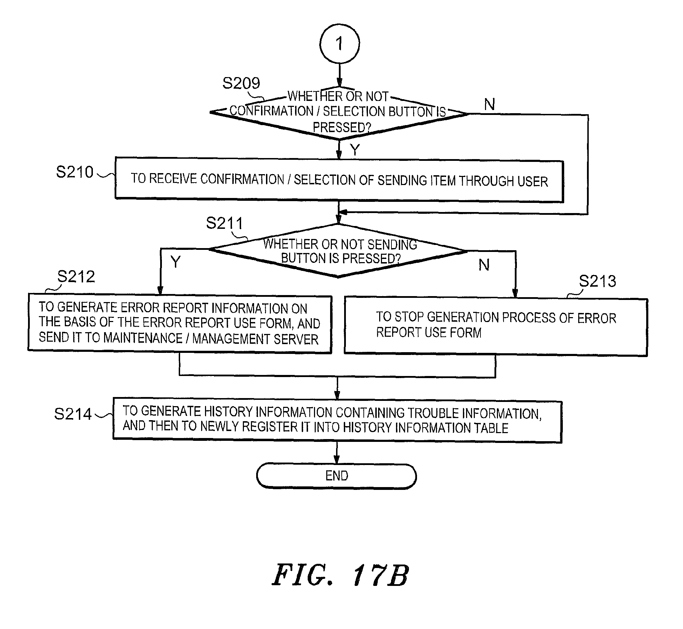

Fig. 17 is a flow chart for explaining operataon when trouble occurs in image forming apparatus of embodiment 1, including Fig. 17A and Fig. 17B.

Next, it is to explain operation in the case that error occurs when the image forming apparatus 100 performs process based on pressing the "copy" button by using Fig. 17.

The trouble detecting section 114, for example, after detected trouble of paper jam in a paper feeding section (Step S201), outputs a trouble detection signal that assigned an error name of a "paper jam_paper feeding section" (Step S202).

After the trouble detecting section 114 outputted the trouble detection signal, the apparatus controlling section 101 stores the "paper jam_paper feeding section" that was assigned by the signal in the temporary storing section 104. Then, the apparatus controlling section 101, after stored the error name, performs an instruction to stop the printer engine 109 in the printing section 108; and instructs the error report scene information generating section 115 to generate error report scene information.

The error report scene information generating section 115, after received the instruction of generating the error report use scene information, firstly, obtains all item numbers, all item names and respective values of the setting value information that is stored in the setting value information store region 11, the apparatus circumstance information that is stored in the apparatus circumstance information store region 12 and the image relation information that is stored in the image relation information store region 13 of the HDD 105 (Step S203).

Then, the error report scene information generating section 115, after obtained all the item numbers, all the item names and respective values, searches the copy process use classification item information table 160 from all sorts of classification item information tables that are stored in the classification item information store region 16 of the HDD 105 on the basis of the job sort, and classifies all item numbers, all item names and respective values on the basis of the classification item information that is stored in the table (Step S204).

Further, the error report scene information generating section 115, after classified all the item numbers, all the item names and respective values, searches a copy process use check item information table 170 from all sorts of check item information tables that are stored in the check item information store region 17 on the basis of the "job sort=Copy" that is stored in the temporary storing section 104. Then, the error report scene information generating section 115 searches check item information that is stored in the table on the basis of the "error name=paper jam_paper feeding section" that is stored in the temporary storing section 104, and obtains an item number in order to input check mark corresponding to the error name previously (Step S205).

Then, the error report scene information generating section 115, after obtained the item number in order to input check mark previously, assigns check mark sign=1 that represents the check mark input into the correspgnding item number, and assigns check mark sign=0 that represents unnecessary check mark input into the item number that is not corresponding (Step S206).

The error report scene information generating section 115, after assigned check mark signs into all item numbers, generates an error report use form on the basis of check mark signs, all item numbers, all item names and respective values by using the error report use template form that is stored in the form store region 18 of the HDD 105 (Step S207). After the error report use form is generated, the error report use form is displayed in the touch panel display in the inputting and displaying section 103 through a control of the apparatus controlling section 101.

In the error report use form that is displayed in the touch panel display, as shown by Fig. 10, on the basis of the program that is stored in the memory (not shown) of the image forming apparatus 100, a check box is displayed automatically that corresponds to respective classification names such as "all sorts", "consumption goods relation", "image relation", "setting value relation" and the like.

In the error report use form that is displayed as an initial scene shown by Fig. 10, the classification names, an error name, the explanation of the error report information, "send" button and "cancel" button are displayed. Here, with respect to the explanation of the error report information, as shown by Fig. 10, an item, in which check mark is inputted with respect to user, is sent as error report information, and an instruction of confirmation/selection of sending item is notified; and "yes" and "no" buttons are displayed for receiving the instruction from user (Step S208).

After user presses the "yes" button of the error report use form that is shown by Fig. 10 (Step S209), for example, after "consumption goods relation" is active, the error report scene information generating section 115 generates an error report use form in which respective items and respective values of the consumption goods relation, and check boxes that correspond to respective items are displayed as shown by Fig. 11 (Step S210). At this time, in respective check boxes, a check mark is inputted only with respect to an check box corresponding to an item whose check mark sign =1. At this time, whenever check marks of the check boxes are inputted or removed by user, check mark signs that have been assigned to respective items are changed into 1 or 0.

For example, after user makes "image relation" of the form that is shown by Fig. 11 active, the error report scene information generating section 115 generates an error report use form in which respective items and respective values of the image relation, and check boxes that correspond to respective items are displayed as shown by Fig. 12. At this time, in the error report use form that is shown by Fig. 12, respective items and respective values of the image relation, check boxes that correspond to respective items, a question sentence whether or not to send image file and a "preview" button capable of previewing image data are displayed. After user pressed the "preview" button, a preview scene of image data as shown by Fig. 13 is displayed in the error report use form. Then, in the case that there is a secret in which image data, that is displayed by the preview, should not be sent to the maintenance/management server 300 outside of company as shown by Fig. 13, user presses "return to the former scene" button of the form, but does not input check mark in the check box that corresponds to an item of, for example, Bitmap file that contains preview content of the image data in the error report use form shown by Fig. 12.

Moreover, in the present embodiment 1, in the case that check mark is inputted in the check box that corresponds to the item of the image data shown by Fig. 12, for example Bitmap file "IMAGE_A.bitmap", the image forming apparatus 100 sends the image data to the maintenance/management server 300; in the case that check mark is not inputted in the check box, the image forming apparatus 100 does not send the image data. However, the present invention is not limited to the case. It is also possible to select a part of the image data and send the selected part of the image data to an external apparatus. For example, in the case that receipt image data displayed by the preview scene of Fig.13 should not be sent to the external apparatus except for the part including letters "receipt", image data including only this part is generated and the generated image data is sent to the external apparatus.

For example, after user makes "setting value relation" of the form that is shown by Fig. 12 active, the error report scene information generating section 115 generates an error report use form in which respective items and respective values of the setting value relation, and check boxes that correspond to respective items are displayed as shown by Fig. 14.

For example, after user makes "other history" (not shown) that is displayed as classification name of the form that is shown by Fig. 14 active, as other history, for reporting plural history information that is executed just before the occurrence of the present process as error report information, the error report scene information generating section 115 obtains number of history information that was set previously according to a rise order in the history information that has been stored in the history information table 150 of the HDD 105 through the apparatus controlling section 101. Then, the error report scene information generating section 115, after obtained the plural history information, displays job sort and date and time of execution of respective history information as shown by Fig. 15, and check boxes that correspond to respective history information in the error report use form. At this time, in respective other history shown by Fig. 15, "detailed confirmation" buttons are displayed for displaying detail of respective history information correspondingly, through pressing respective "detailed confirmation" buttons, it is possible to confirm detailed content of respective history information.

On the one hand, after user pressed the "send" button of the error report use form shown by Fig. 10 (Step S211), the apparatus controlling section 101 instructs the error report information obtaining section 116 to obtain error report information.

The error report information obtaining section 116, after received the instruction of obtaining the error report information, obtains error report information that contains respective items and respective values that correspond to check mark sign=1 in the error report use form, and sends it to the maintenance/management server 300 through the apparatus controlling section 101.

On the other hand, after user pressed "cancel" button of the error report use form shown by Fig. 10, the apparatus controlling section 101 stops generation process of the error report use form in the error report scene informataon generating section 115 (Step S213), and generates new registration of the history information in the history information managing section 106.

The apparatus controlling section 101, after sent the error report information to the maintenance/management server 300, instructs the history information managing section 106 to newly register the history information. In the history information that has been newly registered, trouble information that contains error name and the like that represent that trouble occurred, has been assigned. After the history information managing section 106 completes the new registration of the history information (Step S214), the apparatus controlling section 101 shifts the job waiting condition.

### <Effect of Embodiment 1>

In the image forming apparatus 100 of the present embodiment 1, when trouble occurs in the apparatus, error report forms that contain plural items and respective values in which the setting value information, the apparatus circumstance information and the image relation information are contained that are stored in the HDD store region 10 of the HDD 105, and contain check boxes corresponding to respective items, are made to display in the touch panel in the inputting and displaying section 103, therefore, it is possible for user to select whether or not respective items are contained in error report information through inputting or removing check mark in respective check boxes, thus, it is possible to send error report information that is composed of only selected items to the address of the maintenance/management server 300 without leaking user information when there is no permission of user.

### <Embodiment 2>

### <Structure of Embodiment 2>

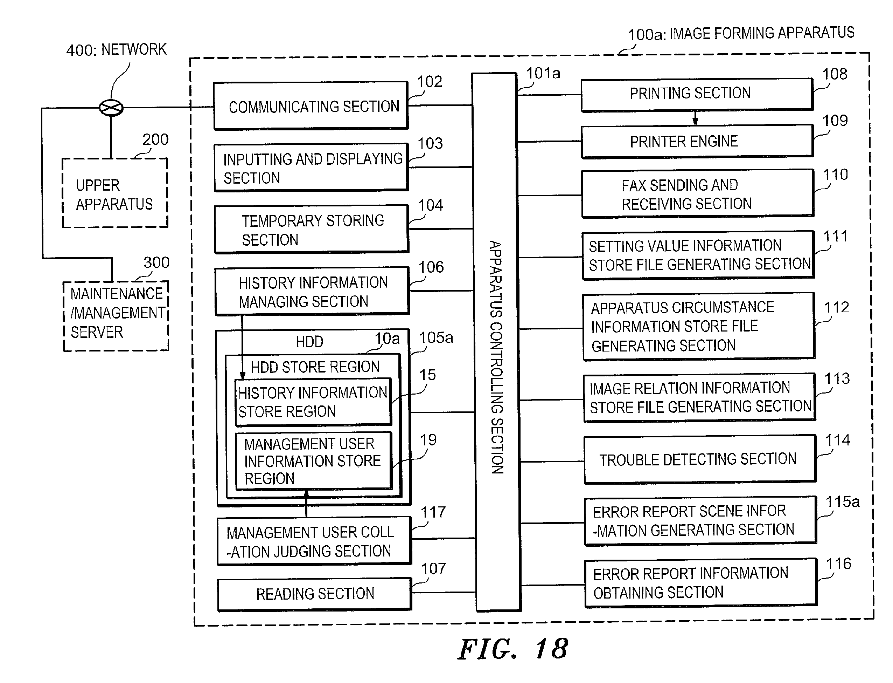

Fig. 18 is a diagram showing a structure of an image forming system that has an image forming apparatus 100a in embodiment 2. Through using the image forming apparatus 100a, it is possible to display the error report use form 2 on the condition of capable of selecting or not capable of selecting respective items that become candidate of error report information on the basis of level of user operating the apparatus.

Moreover, in the image forming apparatus 100a of embodiment 2, the same structure as the image forming apparatus 100 of the embodiment 1 is shown by the same mark, so explanations about these are omitted.

The image forming apparatus 100a comprises, as shown by Fig. 18, an apparatus controlling section 101a that controls the whole apparatus, a communicating section 102, an inputting and displaying section 103, a temporary storing section 104, a HDD 105a, a history information managing section 106, a reading section 107, a printing section 108, a printer engine 109, a fax sending and receiving section 110, a setting value information store file generating section 111, an apparatus circumstance information store file generating section 112, an image relation information store file generating section 113, a trouble detecting section 114, an error report scene information generating section 115a, an error report information obtaining section 116 and a management user collation judging section 117.

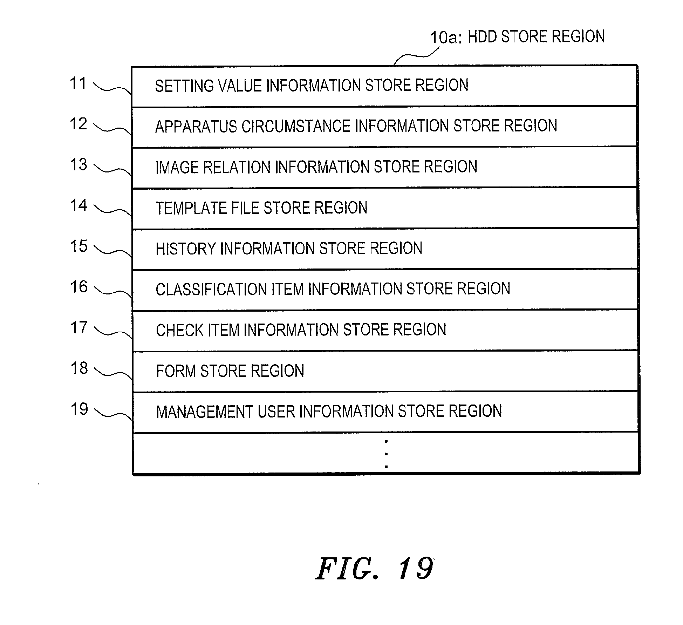

Fig. 19 is a diagram showing a structure of HDD store region 10a in the HDD 105a in embodiment 2.

The HDD 105a is a storing apparatus that is equipped in the image forming apparatus 100a itself, as shown by Fig. 19, has a setting value information store region 11, an apparatus circumstance information store region 12, an image relation information store region 13, a template file store region 14, a history information store region 15, a classification item information store region 16, a check item information store region 17a, a form store region 18 and a management user information store region 19.

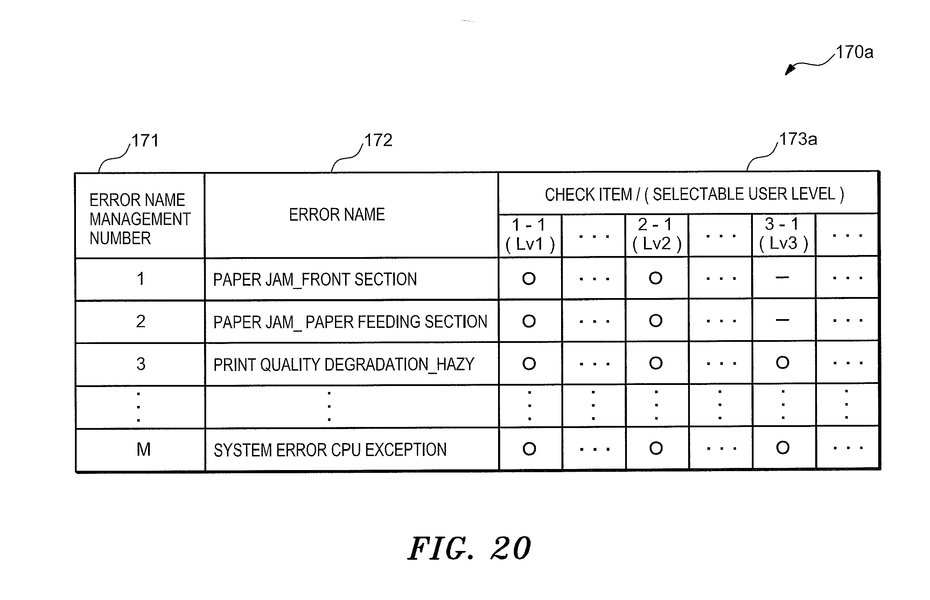

Fig. 20 is a diagram showing a structure of a copy process use check item information table 170a that is stored in the check item information store region 17a.

The check item information store region 17a is a store region for storing the copy process use check item information table 170a shown by Fig. 20. The copy process use check item information table 170a, with respect to the copy process use check item information table 170 of embodiment 1, as shown by Fig. 20, becomes a structure that added information of user level (Lv1, Lv2, Lv3) capable of selecting respective items in structure items of the check item 173a. Here, user of user level 1 (Lv1) is general user who has no management authority. Like this, through adding information of user level capable of selecting respective items in the check item 173a, it is possible for respective users to set items makes selectively correspond to every level of user capable of selecting every level of user operating the image forming apparatus 100a.

Then, in the check item information store region 17a, with respect to the printer process use check item information table of embodiment 1, a printer process use check item information table of embodiment 2 (not shown) that added information of user level capable of selecting respective items as stated above is stored.

Further, in the check item information store region 17a, with respect to the FAX process use check item information table of embodiment 1, a FAX process use check item information table of embodiment 2 (not shown) that information of user level capable of selecting respective items is added as stated above is stored.

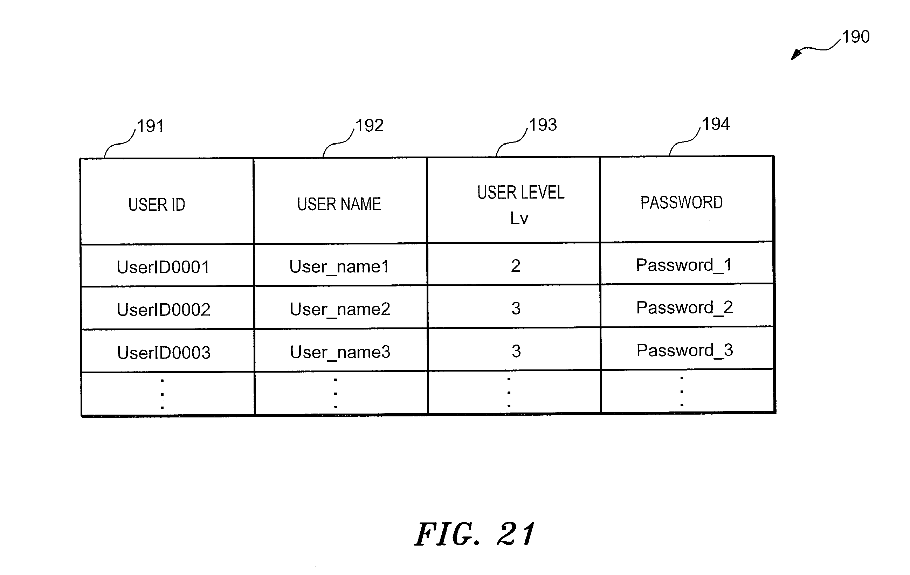

Fig. 21 is a diagram showing a structure of a management user information table 190 that is stored in the management user information store region 19.

The management user information store region 19 is, as shown by Fig. 21, a store region for storing the management user information table 190 in which management user information is stored that is composed of a user ID 201 of respective management users having manager authority, a user name 202, a user level 203 and a password 204. Respective management user information that is stored in the management user information table 190 is registered through an operation of the image forming apparatus 100a of respective management users.

Next, it is to explain a control structure of the image forming apparatus 100a.

The control structure in the case that trouble does not occur in the image forming apparatus 100a is the same as the control structure in the case that trouble does not occur in the image forming apparatus 100. Therefore, next, it is to explain the control structure when trouble occurs in the image forming apparatus 100a.

Moreover, with respect to the control structure when trouble occurs in the image forming apparatus 100a, the explanation about the same control structure with the image forming apparatus 100 of embodiment 1 is omitted.

After the trouble detecting section 114 outputted the trouble detection signal, the apparatus controlling section 101a stores the error name that was assigned to the signal in the temporary storing section 104. Then, the apparatus controlling section 101a, after stored the error name, performs an instruction of stopping the printer engine 109 in the printing section 108; and instructs the error report scene information generating section 115a to generate error report scene information. Here, in the temporary storing section 104, job sort is stored that represents present process of the image forming apparatus 100a.

The error report scene information generating section 115a is a part that generates error report use scene information to represent in the touch panel in the inputting and displaying section 103. That is, the error report scene information generating section 115a, after received the instruction of generating the error report use scene information, firstly, obtains all item numbers, all item names and respective values of setting value information that was stored in the setting value information store region 11, apparatus circumstance information that was stored in the apparatus circumstance information store region 12 and image relation information that was stored in the image relation information store region 13 of the HDD 105a.

Then, the error report scene information generating section 115a, after received all the item numbers, all the item names and respective values, searches the corresponding table from all sorts of classification item information tables that are stored in the classification item information store region 16 of the HDD 105a on the basis of job sort, and classifies all the item numbers, all the item names and respective values on the basis of the classification item information that is stored in the table.

Further, the error report scene information generating section 115a, after classified data of all the item numbers, all the item names and respective values, searches the corresponding table from all sorts of error sort check item corresponding information tables that are stored in the check item information store region 17a on the basis of job sort that is stored in the temporary storing section 104. Then, the error report scene information generating section 115a searches check item information of error sort that is stored in the table on the basis of error name that is stored in the temporary storing section 104, and obtains user level capable of selecting respective item numbers, and obtains item number in order to previously input check mark corresponding to the error name.

Firstly, the error report scene information generating section 115a, after obtained the user level capable of selecting respective items, assigns a user level sign (any one of Lv1, Lv2 and Lv3) that represents respective user levels into respective item numbers.

Next, the error report scene information generating section 115a, after obtained the item number in order to previously input check mark, assigns check mark sign=1 that represents check mark input into a corresponding item number, and assigns check mark sign=0 that represents unnecessary check mark input into an item number that is not corresponding.

The error report scene information generating section 115a, after assigned user level sign and check mark sign into all item numbers, generates an error report use form 2 on the basis of the user level sign, the check mark sign, all the item numbers, all the item names and respective values by using the error report use template form that is stored in the form store region 18a of the HDD 105a.

Here, in the error report use form 2, because before collation judgment of management user stated later is performed in the management user collation judging section 117, in an item in which user level sign of over user level 2 (Lv2, Lv3) is assigned, a corresponding check box is set not to display; and in an item in which user level sign of user level 1 is assigned, a corresponding check box is set to display. Then, in the form, in the item in which the check box is set to display, with respect to the check mark sign=1, check mark is set so as to be inputted in the corresponding check box. After the error report use form 2 is generated, the error report use form 2 is displayed in the touch panel display in the inputting and displaying section 103 through a control of the image forming apparatus 100a. Hereinafter, it is to explain the error report use form 2 in detail.

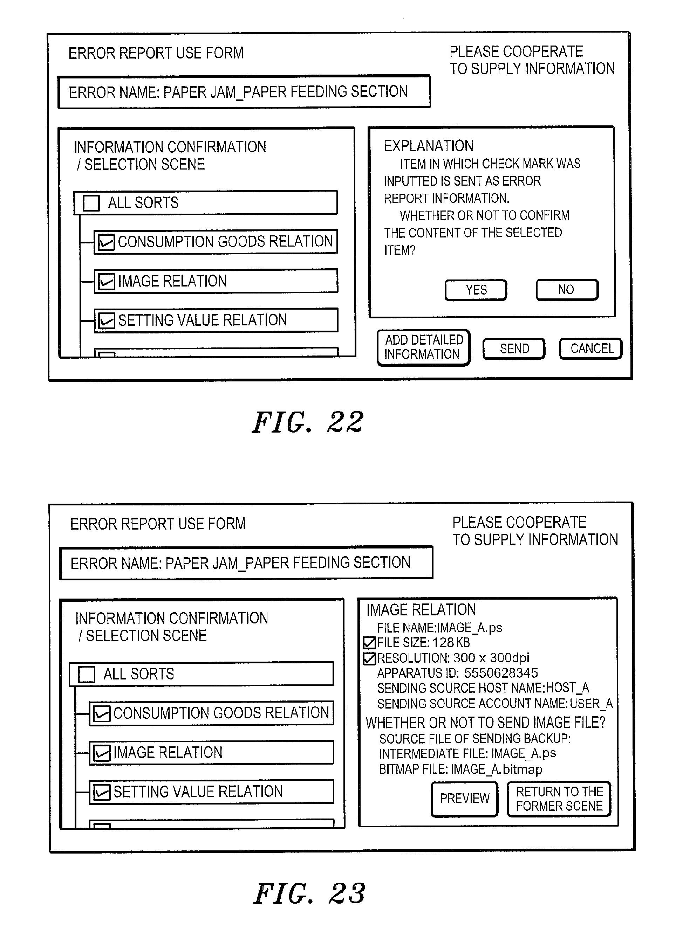

Fig. 22 is a first diagram showing an example of an error report use form 2 in embodiment 2.

The error report use form 2 is, as shown by Fig. 22, a structure that adds an "add detailed information" button with respect to the error report use form in embodiment 1. It is stated later in the case that the "add detailed information" button is pressed.

Fig. 23 is a second diagram showing an example of an error report use form 2 in embodiment 2.

After user refers to the error report use form 2 shown by Fig. 22 that is displayed in the inputting and displaying section 103 and "yes" button of explanation part of error report is pressed, the error report scene information generating section 115a generates, as shown by Fig. 23, error report use form 2 in which corresponding check box only with respect to item whose user level sign=Lv1 is displayed, and check mark is inputted to check box only with respect to item whose user level sign of Lv1 and whose check mark sign of 1 are assigned. Here, as shown by Fig. 23, because check boxes corresponding to respective items cannot be displayed, so user of user level 1 cannot select items of over user level 2 that are displayed in the error report use form 2.

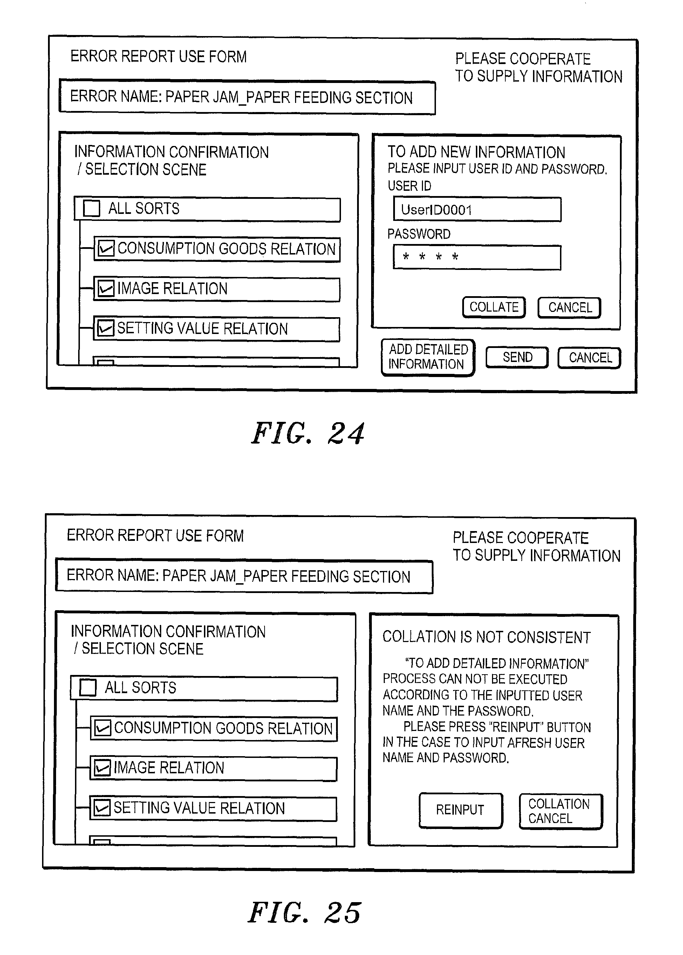

Fig. 24 is a third diagram showing an example of an error report use form 2 in embodiment 2.

After user pressed the "add detailed information" button that is displayed in the error report use form 2 shown by Fig. 22 that is displayed in the inputting and displaying section 103, the error report scene information generating section 115a generates an error report use form 2 in which respective text boxes of user ID and password input use as shown by Fig. 24 are displayed.

User inputs user ID and password into text boxes of user ID and password input use in the error report use form 2 that is shown by Fig. 24 through the inputting and displaying section 103, and presses "collate" button in the error report use form 2. The image forming apparatus 100a, after pressed the "collate" button in the error report use form 2, instructs the management user collation judging section 117 to collate and judge management user; and transfers the inputted user ID and password to respective text boxes of the form.

The management user collation judging section 117 is a judging section for judging whether or not collation of the user ID and the password that are inputted in respective text boxes of the error report use form 2 shown by Fig. 24, and plural management user information that has been registered in the management user information table 190 that is stored in the management user information store region 19 of the HDD 105a are consistent. That is, on the one hand, the management user collation judging section 117, after received the instruction of collating and judging the management user, the user ID and the password, searches the management user information table 190 on the basis of the user ID and the password, and judges that the collation is consistent in the case that the corresponding management user exists. When the management user collation judging section 117 judges that the collation is consistent, the image forming apparatus 100a generates a collation consistency signal and sends the signal to the error report scene information generating section 115a. Here, in the collation consistency signal, the user level of the management user is added.

On the other hand, the management user collation judging section 117 judges that the collation is not consistent in the case that the corresponding management user does not exist. When the management user collation judging section 117 judges that the collation is not consistent, the apparatus controlling section 101a generates a collation inconsistency signal, and sends the signal to the error report scene information generating section 115a.

The error report scene information generating section 115a, after received the collation inconsistency signal, in the case that user level sign that is assigned to the signal is, for example, Lv2, adds and displays check box corresponding to item of user level sign=Lv2, and generates an error report use form 2 in which check mark is inputted to check box only with respect to item whose check mark sign of 1 is assigned in the added and displayed item. Here, as shown by Fig. 23, because check boxes corresponding to respective items cannot be displayed, so user of user level 2 cannot select items of over user level 3 that are displayed in the error report use form 2.

Further, the error report scene information generating section 115a, in the case that user level sign that is assigned to the collation inconsistency signal is, for example, Lv3, adds and displays check boxes corresponding to items of user level sign=Lv2 and 3, and generates an error report use form 2 in which check mark is inputted to check box only with respect to item whose check mark sign of 1 is assigned in the added and displayed item. Here, the management user of the user level 3 has a selection authority of all items.

Fig. 25 is a fourth diagram showing an example of an error report use form 2 in embodiment 2.

On the other hand, the error report scene information generating section 115a, after received the collation inconsistency signal, because the collation is not consistent as shown by Fig. 25, generates an error report use form 2 that contains a command that process cannot be performed based on the "add detailed information", and a message urging re-inputting of user name and password.

On the one hand, in the case that user pressed "re-input" button in the error report use form 2, the error report scene information generating section 115a generates an error report use form 2 for inputting the user ID and the password shown by Fig. 24.

On the other hand, in the case that user pressed "collation cancel" button in the form, the error report scene information generating section 115a generates an error report use form 2 of an initial scene shown by Fig. 22.

On the one hand, after user presses the "send" button (not shown) that is displayed in the error report use form 2 of the initial scene, the apparatus controlling section 101a instructs the error report information obtaining section 116 to obtain error report information. Then, the error report information that was obtained through the error report information obtaining section 116 is sent to the address of the maintenance/management server 300 through the communicating section 102 through a control of the apparatus controlling section 101a. Then, after the error report information is sent, the apparatus controlling section 101a instructs the history information managing section 106 to generate history information.

On the other hand, after user presses the "cancel" button (not shown) that is displayed in the error report use form 2 of the initial scene, the apparatus controlling section 101a stops the generation of the error report use form 2 in the error report scene information generating section 115a, and instructs the history information managing section 106 to generate history information.

The history information managing section 106, after received the instruction of generating history information, stores the history information that contains trouble information occurring in the image forming apparatus 100a in the history information table 150 of the history information storing region 15 of the HDD 105a. Thus, operation based on job is completed in the image forming apparatus 100a.

### <Operation of Embodiment 2>

Hereinafter, it is to explain operation of the image forming apparatus 100a in embodiment 2 of the present invention.

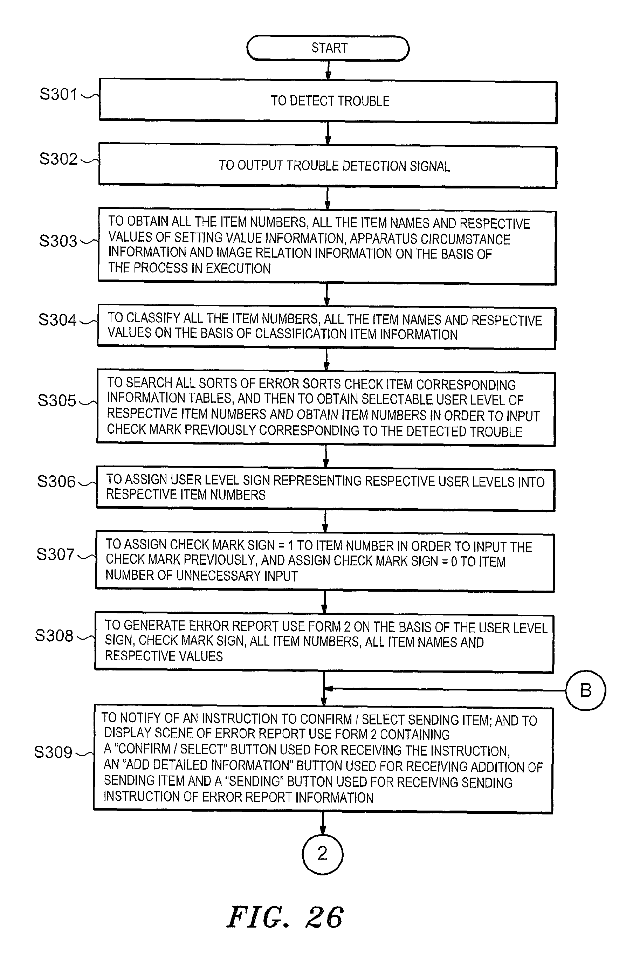

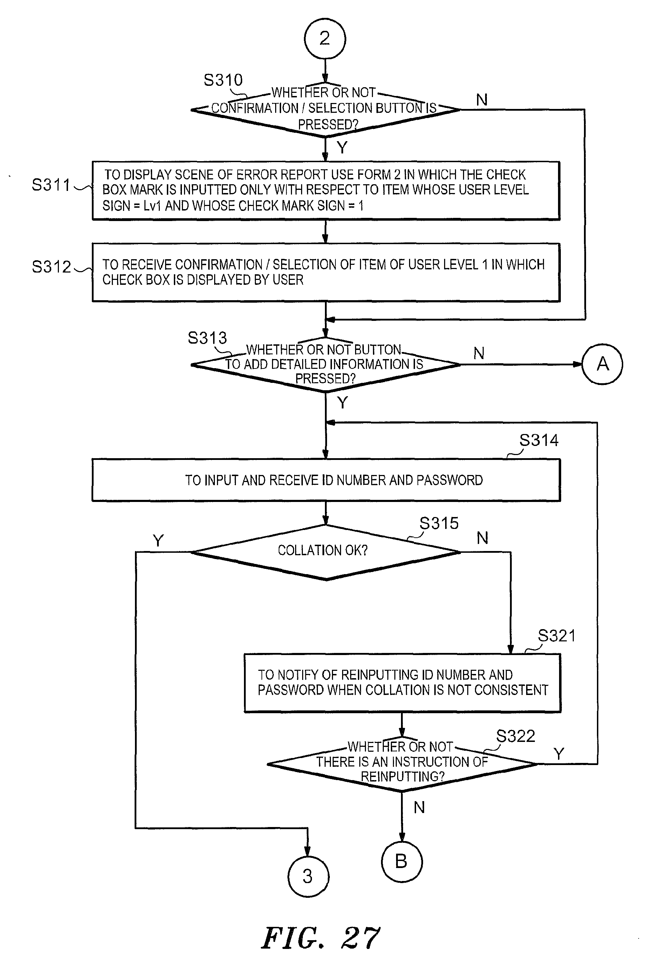

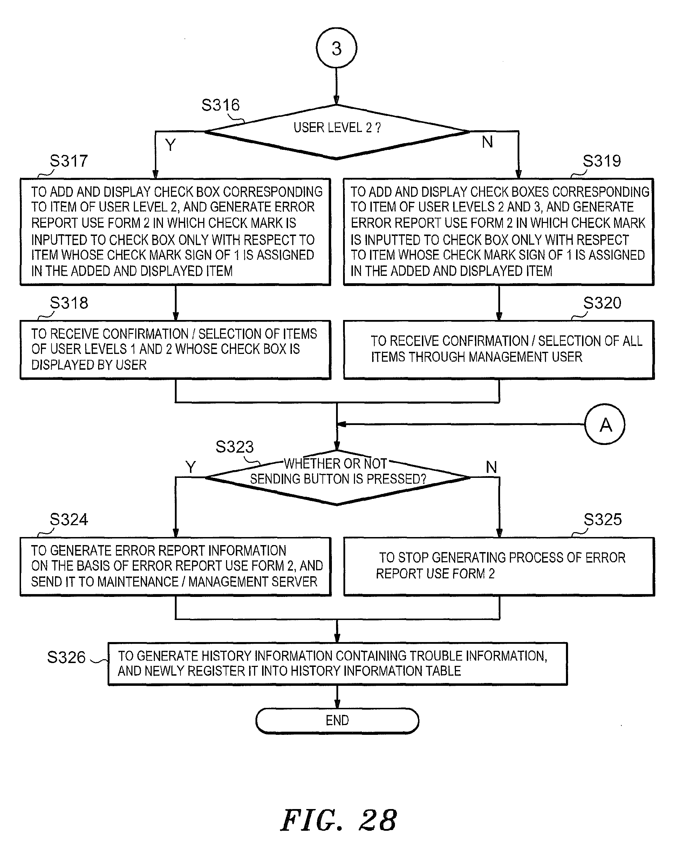

Fig. 26 is a first flow chart for explaining operation when trouble occurs in image forming apparatus of embodiment 2; Fig. 27 is a second flow chart for explaining operation when trouble occurs in image forming apparatus of embodiment 2; and Fig. 28 is a third flow chart for explaining operation when trouble occurs in image forming apparatus of embodiment 2.

Next, it is to explain operation in the case that error occurs when process based on pressing the "copy" button is performed in the image forming apparatus 100a by using Fig. 26 and Fig. 27.

The trouble detecting section 114, for example, after detected trouble of paper jam in the paper feeding section (Step S301), outputs a trouble detection signal that assigned error name of the "paper jam_paper feeding section" (Step S302).

After the trouble detecting section 114 outputted the trouble detection signal, the apparatus controlling section 101a stores error name that is assigned to the signal in the temporary storing section 104. Then, the apparatus controlling section 101a, after stored the error name, performs an instruction of stopping the printer engine 109 in the printing section 108; and instructs the error report scene information generating section 115a to generate error report scene information. At this time, in the temporary storing section 104, the "job sort=Copy" that represents the present process of the image forming apparatus 100a is stored.

The error report scene information generating section 115a, after received the instruction of generating error report scene information, firstly, obtains all item numbers, all item names and respective values of setting value information that was stored in the setting value information store region 11, apparatus circumstance information that was stored in the apparatus circumstance information store region 12, image relation information that was stored in the image relation information store region 13 of the HDD 105a (Step S303).

Then, the error report scene information generating section 115a, after received all the item numbers, all the item names and respective values, searches the corresponding table from all sorts of classification item information tables that were stored in the classification item information store region 16 of the HDD 105a on the basis of job sort, and classifies all the item numbers, all the item names and respective values on the basis of the classification item information that is stored in the table (Step S304).

Further, the error report scene information generating section 115a, after classified data of all the item numbers, all the item names and respective values, searches the corresponding table from all sorts of error sort check item corresponding information tables that are stored in the check item information store region 17a on the basis of job sort that is stored in the temporary storing section 104. Then, the error report scene information generating section 115a searches error sort check item corresponding information that is stored in the table on the basis of error name that is stored in the temporary storing section 104, obtains user level capable of selecting respective item numbers, and obtains item number in order to previously input check mark corresponding to the error name (Step S305).

Firstly, the error report scene information generating section 115a, after obtained the user level capable of selecting respective item numbers, assigns a user level sign (any one of Lv1, Lv2 and Lv3) that represents respective user levels into respective item numbers (Step S306).

Next, the error report scene information generating section 115a, after obtained the item number in order to previously input check mark, assigns check mark sign=1 that represents check mark input into a corresponding item number, and assigns check mark sign=0 that represents unnecessary check mark input into an item number that is not corresponding (Step S307).

The error report scene information generating section 115a, after assigned user level sign and check mark sign into all item numbers, generates an error report use form 2 on the basis of the user level sign, the check mark sign, all the item numbers, all the item names and respective values by using the error report use template form that is stored in the form store region 18 of the HDD 105a (Step S308). After the error report use form 2 is generated, the error report use form 2 is displayed, as shown by Fig. 22, in the touch panel display in the inputting and displaying section 103 through a control of the apparatus controlling section 101a.

At this time, in the error report use form 2, because before collation judgment of management user stated later is performed in the management user collation judging section 117, in an item in which user level sign of over user level 2 (Lv2, Lv3) is assigned, a corresponding check box is set not to display; and in an item in which user level sign of user level 1 is assigned, a corresponding check box is set to display. Then, in the form, in the item in which the check box is set to display, with respect to the item of check mark sign=1, check mark is set so as to be inputted in the corresponding check box. After the error report use form 2 is generated, the error report use form 2 is displayed in the touch panel display in the inputting and displaying section 103 through a control of the image forming apparatus 100a (Step S309).

After user refers to the error report use form 2 shown by Fig. 22 that is displayed in the inputting and displaying section 103, and "yes" button is pressed for confirming/selecting the selected item of explanation part of error report (Step S310), the error report scene information generating section 115a generates, as shown by Fig. 23, an error report use form 2 in which corresponding check box only with respect to item whose user level sign=Lv1 is displayed, and check mark is inputted to the check box only with respect to item whose user level sign of Lv1 and whose check mark sign of 1 are assigned (Step S311). Here, as shown by Fig. 23, because check boxes corresponding to respective items cannot be displayed, so user of user level 1 cannot select items of over user level 2 that are displayed in the error report use form 2. At this time, user performs a confirmation/selection only with respect to item whose user level sign of 1 (Step S312).

After user presses the "add detailed information" button that is displayed in the error report use form 2 shown by Fig. 22 that is displayed in the inputting and displaying section 103 (Step S313), the error report scene information generating section 115a generates an error report use form 2 in which respective text boxes of user ID and password input use are displayed as shown by Fig. 24.

User inputs user ID and password into text boxes of user ID and password input use in the error report use form 2 that is shown by Fig. 24 through the inputting and displaying section 103, and presses "collate" button in the error report use form 2 (Step S314). The image forming apparatus 100a, after pressed the "collate" button in the error report use form 2, instructs the management user collation judging section 117 to collate and judge management user; and transfers the inputted user ID and password to respective text boxes of the form.

On the one hand, the management user collation judging section 117, after received the instruction of collating and judging the management user, the user ID and the password, searches the management user information table 190 on the basis of the user ID and the password, and judges that the collation is consistent in the case that the corresponding management user exists (Step S315). When the management user collation judging section 117 judges that the collation is consistent, the apparatus controlling section 101a generates a collation consistency signal, and sends the signal to the error report scene informataon generating section 115a. Here, in the collation consistency signal, the user level of the management user is added.

On the other hand, the management user collation judging section 117 judges that the collation is not consistent in the case that the corresponding management user does not exist. When the management user collation judging section 117 judges that the collation is not consistent, the apparatus controlling section 101a generates a collation inconsistency signal, and sends the signal to the error report scene information generating section 115a.

On the one hand, the error report scene information generating section 115a, after received the collation consistency signal, in the case that user level sign that is assigned to the signal is, for example, Lv2 (Step S316), adds and displays check box corresponding to item of user level sign=Lv2, and generates an error report use form 2 in which check mark is inputted to check box only with respect to item whose check mark sign of 1 is assigned in the added and displayed item (Step S317). Here, as shown by Fig. 23, because check boxes corresponding to respective items cannot be displayed, so user of user level 2 cannot select items of over user level 3 that are displayed in the error report use form 2. At this time, user performs a confirmation/selection only with respect to item whose user level sign of 1 and 2 (Step S318).

Further, the error report scene information generating section 115a, in the case that user level sign that is assigned to the collation consistency signal is, for example, Lv3, adds and displays check boxes corresponding to items of user level sign=Lv2 and Lv3, and generates an error report use form 2 in which check mark is inputted to check box only with respect to item whose check mark sign of 1 is assigned in the added and displayed item (Step S319). Here, the management user of the user level 3 has a selection authority of all items. At this time, the management user performs a confirmation/selection of all items (Step S320).

On the other hand, the error report scene information generating section 115a, after received the collation inconsistency signal, because the collation is not consistent as shown by Fig. 25, generates an error report use form 2 that contains a command that process cannot be performed based on the "add detailed information", and a message urging re-inputting of user name and password (Step S321).

On the one hand, in the case that user pressed "re-input" button in the error report use form 2 (Step S322), the error report scene information generating section 115a generates an error report use form 2 for inputting the user ID and the password shown by Fig. 24.

On the other hand, in the case that user pressed "collation cancel" button in the form, the error report scene information generating section 115a generates an error report use form 2 of an initial scene shown by Fig. 22.

On the one hand, after user presses the "send" button (not shown) that is displayed in the error report use form 2 of the initial scene (Step S323), the apparatus controlling section 101a instructs the error report information obtaining section 116 to obtain error report information. Then, the error report information that was obtained through the error report information obtaining section 116 is sent to the address of the maintenance/management server 300 through the communicating section 102 through a control of the apparatus controlling section 101a (Step S324). Then, after the error report information is sent, the apparatus controlling section 101a instructs the history information managing section 106 to generate history information.

On the other hand, after user presses the "cancel" button (not shown) that is displayed in the error report use form 2 of the initial scene, the apparatus controlling section 101a stops the generation of the error report use form 2 in the error report scene information generating section 115a (Step S325), and instructs the history information managing section 106 to generate history information.

The history information managing section 106, after received the instruction of generating history information, stores the history information that contains trouble information occurring in the image forming apparatus 100a in the history information table 150 of the history information storing region 15 of the HDD 105a (Step S326). Thus, operation based on job is completed in the image forming apparatus 100a.

### <Effect of Embodiment 2>

According to the image forming apparatus 100a of embodiment 2, because user levels are set capable of selecting every item with respect to plural items which are contained in setting value information, apparatus circumstance information and image relation information, and items are limited that is selectively displayed in the error report use form by adjusting levels of user operating the apparatus, so it is possible for only user of high user level to select items corresponding to information that has anxiety and that contains secret, thus, it is possible to raise security level of information management.
The utilization possibility on industry:

In the embodiment stated above, it is to explain a case that there is a MFP having a printer function, a copy function and a facsimile function in the image forming apparatus of the present invention, but it also can be applied to apparatus such as printer, duplicator apparatus, facsimile apparatus and scanner apparatus.

The present invention is not limited to the foregoing embodiments but many modifications and variations are possible within the spirit and scope of the appended claims of the invention.

## Claims

1. An image forming apparatus that is connected with an external apparatus through network, comprising:
an image generating section for generating image data;
a storing section for storing history information representing history of apparatus operation on the basis of the generated image data;
a trouble detecting section for detecting trouble that occurs in the apparatus;
a displaying process section that at least displays a screen of respective items that are contained in history information corresponding to current image data selectively, when trouble is detected;
a selection instruction receiving section that receives a selection instruction of respective items from the displayed screen;
a generating section that generates trouble report information containing the respective items in the selection instruction; and
a sending control section that sends the generated trouble report information to the external apparatus.

2. The image forming apparatus according to claim 1,
wherein information that relates to the image data is contained in the trouble report information.

3. The image forming apparatus according to claim 1,
wherein the image data itself is contained in the trouble report information.

4. The image forming apparatus according to claim 3,
wherein the image data comprises a part of image data generated by the image generating section.

5. The image forming apparatus according to claim 1, further comprising:
a management user information storing section that stores individual discrimination information containing user level of user having managing authority;
an item access authority information storing section that stores item access authority information that makes the respective items that are contained in the history information selectively correspond to user level;
an instructing section that instructs operator of the apparatus to input individual discrimination information; and
a judging section that judges whether or not the inputted individual discrimination information collates with the individual discrimination information stored in the management user information storing section,
wherein the displaying process section displays a screen of respective items that correspond to user level of the operator selectively, when the inputted individual discrimination information is judged to collate with the stored individual discrimination information.

6. The image forming apparatus according to claim 5,
wherein information that relates to the image data is contained in the trouble report information.

7. The image forming apparatus according to claim 5,
wherein the image data itself is contained in the trouble report information.

8. The image forming apparatus according to claim 7,
wherein the image data comprises a part of image data generated by the image generating section
